(19) Europäisches Patentamt
European Patent Office
Office européen des brevets

(11) **EP 4 102 956 B1**

(12) **EUROPÄISCHE PATENTSCHRIFT**

(45) Veröffentlichungstag und Bekanntmachung des Hinweises auf die Patenterteilung:
**06.11.2024   Patentblatt 2024/45**

(21) Anmeldenummer: **21839393.2**

(22) Anmeldetag: **13.12.2021**

(51) Internationale Patentklassifikation (IPC):
*A01G 9/18* (2006.01)   *A01G 22/00* (2018.01)
*C02F 3/32* (2023.01)   *C12M 1/00* (2006.01)
*A01G 31/00* (2018.01)

(52) Gemeinsame Patentklassifikation (CPC):
**A01G 31/06; C02F 3/32; Y02P 60/21; Y02W 10/37**

(86) Internationale Anmeldenummer:
**PCT/EP2021/085464**

(87) Internationale Veröffentlichungsnummer:
**WO 2022/123076 (16.06.2022 Gazette 2022/24)**

(54) **VERFAHREN ZUM BETRIEB EINER KULTURANLAGE FÜR AQUATISCHE PFLANZEN, SOWIE KULTURANLAGE SELBST, SOWIE COMPUTERPROGRAMMPRODUKT**

PROCESS FOR OPERATING A CULTURE PLANT FOR AQUATIC PLANTS, CULTURE PLANT AND COMPUTER PROGRAM

PROCÉDÉ POUR OPÉRER UNE INSTALLATION DE CULTURE POUR L'ÉLEVAGE DES PLANTES AQUATIQUES, LADITE INSTALLATION DE CULTURE ET PROGRAMME INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2020   DE 102020133132**

(43) Veröffentlichungstag der Anmeldung:
**21.12.2022   Patentblatt 2022/51**

(73) Patentinhaber: **Schmidt, Karl-Michael**
**47447 Moers (DE)**

(72) Erfinder: **Schmidt, Karl-Michael**
**47447 Moers (DE)**

(74) Vertreter: **Schmidt, Karl-Michael**
**Buchenweg 65**
**47447 Moers (DE)**

(56) Entgegenhaltungen:
**DE-B3- 102018 003 368**

- **CHONG Y-X ET AL: "Growth feature of biomass of Lemna aequinoctialis and Spirodela polyrrhiza in medium with nutrient character of wastewater", COMPENDEX, ENGINEERING INFORMATION, INC., NEW YORK, NY, US, 1 January 2003 (2003-01-01), XP002806135**
- **DATABASE COMPENDEX [online] ENGINEERING INFORMATION, INC., NEW YORK, NY, US; January 2003 (2003-01-01), CHONG Y-X ET AL: "Growth feature of biomass of Lemna aequinoctialis and Spirodela polyrrhiza in medium with nutrient character of wastewater", XP002806135, Database accession no. E2005479483830**
- **CHONG Y-X ET AL: "Growth feature of biomass of Lemna aequinoctialis and Spirodela polyrrhiza in medium with nutrient character of wastewater", SURFACE MINING - BRAUNKOHLE AND OTHER MINERALS JANUARY/MARCH 2003 GDMB GESELLSCHAFT FUR BERGBAU, METALLURGIE, ROHSTOFF- UND UMWELTTECHNIK E.V. DE, vol. 55, no. 1, January 2003 (2003-01-01), pages 59 - 64**
- **CHAKRABARTI RINA ET AL: "Mass Production of Lemna minor and Its Amino Acid and Fatty Acid Profiles", FRONTIERS IN CHEMISTRY, vol. 6, 15 October 2018 (2018-10-15), pages 1 - 16, XP055908778, DOI: 10.3389/fchem.2018.00479**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- DATABASE COMPENDEX [online] ENGINEERING INFORMATION, INC., NEW YORK, NY, US; January 2003 (2003-01-01), CHONG Y-X ET AL: "Growth feature of biomass of Lemna aequinoctialis and Spirodela polyrrhiza in medium with nutrient character of wastewater", XP002806135, Database accession no. E2005479483830
- SURFACE MINING - BRAUNKOHLE AND OTHER MINERALS JANUARY/MARCH 2003 GDMB GESELLSCHAFT FUR BERGBAU, METALLURGIE, ROHSTOFF- UND UMWELTTECHNIK E.V. DE, vol. 55, no. 1, January 2003 (2003-01-01), pages 59 - 64
- TEBBANI SIHEM ET AL: "Nonlinear predictive control for maximization of CO2bio-fixation by microalgae in a photobioreactor", BIOPROCESS AND BIOSYSTEMS ENGINEERING, SPRINGER, DE, vol. 37, no. 1, 21 March 2013 (2013-03-21), pages 83 - 97, XP035365233, ISSN: 1615-7591, [retrieved on 20130321], DOI: 10.1007/S00449-013-0928-0
- ABDOLLAHI JAVAD ET AL: "Lipid production optimization and optimal control of heterotrophic microalgae fed-batch bioreactor", CHEMICAL ENGINEERING SCIENCE, vol. 84, 24 September 2012 (2012-09-24), GB, pages 619 - 627, XP055909285, ISSN: 0009-2509, DOI: 10.1016/j.ces.2012.09.005

## Beschreibung

Die Erfindung betrifft ein Verfahren zum Betrieb einer Kulturanlage für aquatische Pflanzen, sowie Kulturanlage selbst, bei welcher aquatische Pflanzen, insbesondere Wasserlinsen (Lemnaceae) zum Einsatz kommen, sowie ein Computerprogrammprodukt.
Die Anwendung des anmeldegemäßen Verfahrens eignet sich für alle Gattungen (Arten) von Lemnaceae: Diese sind: Lemna, Spirodela, Wolffia, Wolfiella, Landoltia sowie mögliche Kreuzungen unter den Gattungen.

## Stand der Technik

Die generelle Kultivierung von Wasserlinsen zur Herstellung von Futtermitteln im Indoor-Verfahren ist u.a. bekannt aus den Dokumenten EP 2 331 238 Blund EP 2 928 286 B1.

Die Wasserlinse ist bekanntlich schwachlichttolerant. Somit eignet sie sich zum einen für eine Indoor-Kultivierung in einem Gewächshaus. Zum anderen kann sie in einem gestapelten Kulturwannensystem kultiviert werden. Zumindest ist eine Sprossung in der vegetativen Vermehrungszone unter Schwachlichtbedingungen möglich. Es hat sich ferner gezeigt, dass eine entsprechende Hilfsausleuchtung mit modernen, wellenlängenspezifischen LED-Leuchten zonenweise möglich ist. Aus den oben genannten Dokumenten ist zudem bekannt, dass die Wasserlinsen in einer Etagenkonstruktion kultiviert werden können, um so einen erheblich höheren Grundflächenertrag für Foto-Bioreaktoren zu generieren. Dieser Grundflächenertrag multipliziert sich nämlich mit der Anzahl der verwendeten Etagen auf denen die Kulturwannen angeordnet sind.

Es ist ferner bekannt, einen Foto-Bioreaktor in Zonen einzuteilen. In den Zonen können verschiedene aquatische Pflanzenkulturen kultiviert werden, um anschließend ein Mischfuttermittel herzustellen. Die Verfahrensweisen und Anforderungen für die Herstellung eines Mischfuttermittels aus aquatischer Biomasse sind aber deutlich verschieden zu den Anforderungen zur Herstellung proteinmaximierter Biomasse, oder eines hochreinen Protein- oder Ami nosäuren-Isolates.

Die Erstellung von Proteinisolaten aus pflanzlichen Substraten ist als solche bekannt. In den bekannten Verfahren werden ebenfalls Biomassen geerntet, zumeist Landpflanzen. Die Isolat-Herstellung kann aber nie besser sein, als was der Rohstoff nach der Ernte bereitstellt

Es ist ferner bekannt, dass Wasserlinsen eine Neigung zur Hyperakkumulation von Metallionen, auch Schwermetallionen, haben. Diese können durch das beschriebene Indoor-Verfahren bereits reduziert werden, indem Umwelteinflüsse, wie bspw. die bei einer Freilandkultivierung, reduziert werden. Je nach Wasserqualität sind hier aber auch entsprechende Maßnahmen vorzunehmen, denn auch wenn beispielsweise Kondenswasser zurückgeführt wird, kann dieses auf dem Weg zur Rückführung zusätzlichen Kontakt mit Metall- und anderen Oberflächen haben.

Dokument DE 10 2018 003 368 B3 offenbart ein Verfahren zum Betrieb einer Kulturanlage für proteinreiche aquatische Pflanzen, sowie Kulturanlagen selbst, bei denen insbesondere Wasserlinsen hergestellt werden. D1 setzt sich zum Ziel, ein Kulturverfahren zur Proteinmaximierung in der Biomasse zu erreichen. Dazu werden Kulturwannen bereitgestellt, die je nach Position der Partial-Beerntungszone Starklichtzonen oder Schwachlichtzonen entsprechen.

Dokument CHAKRABARTI RINA ET AL: "Mass Production of Lemna minor and Its Amino Acid and Fatty Acid Profiles", FRONTIERS IN CHEMISTRY, Bd. 6, 15. Oktober 2018 (2018-10-15), Seiten 1-16, offenbart, dass 50% der Produktion durch das händische Abschöpfen in einem Außengewässer geerntet werden können.

Dokument DATABASE COMPENDEX [Online], ENGINEERING INFORMATION, INC., NEW YORK, NY, US; Januar 2003 (2003-01), CHONG Y-X ET AL: "Growth feature of biomass of Lemna aequinoctialis and Spirodela polyrrhiza in medium with nutrient character of wastewater", Database accession no. E2005479483830; & SURFACE MINING - BRAUNKOHLE AND OTHER MINERALS JANUARY/MARCH 2003 GDMB GESELLSCHAFT FUR BERGBAU, METALLURGIE, ROHSTOFF- UND UMWELTTECHNIK E.V., Bd. 55, Nr. 1, Januar 2003, Seiten 59-64, offenbart, dass die Wachstumsrate von der Bedeckungsdichte abhängt und einen sigmoidal Verlauf aufweist.

Dokumente TEBBANI SIHEM ET AL: "Nonlinear predictive control for maximization of CO2 bio-fixation by microalgae in a photobioreactor", BIOPROCESS AND BIOSYS-TEMS ENGINEERING, Bd. 37, Nr. 1, 21. März 2013, Seiten 83-97 und ABDOLLAHI JA-VAD ET AL: "Lipid production optimization and optimal control of heterotrophic microalgae fed-batch bioreactor", CHEMICAL ENGINEERING SCIENCE, Bd. 84, 24. September 2012 (2012-09-24), Seiten 619-627, offenbaren jeweils das Kultivieren von Algen.

## Aufgabe der Erfindung

Der Erfindung liegt daher die Aufgabe zugrunde, ein Kulturverfahren, eine Kulturanlage (=Einrichtung) und ein Computerprogrammprodukt der gattungsgemäßen Art dahingehend weiterzuentwickeln, dass im Indoor-Verfahren eine hochwertige resultierende Biomassen- und Proteinqualität erzielt wird, bei gleichzeitiger Ermittlung und Steuerung optimaler Kulturbedingungen.

**Lösung**

Die gestellte Aufgabe wird bei einem Verfahren der gattungsgemäßen Art, erfindungsgemäß durch die kennzeichnenden Merkmale des Patentanspruches 1 gelöst.

Diesbezügliche vorteilhafte Ausgestaltungen des Verfahrens sind in den abhängigen Ansprüchen 2 bis 26 angegeben.

Hinsichtlich einer Kulturanlage der gattungsgemäßen Art wird die gestellte Aufgabe erfindungsgemäß durch die kennzeichnenden Merkmale des Patentanspruches 27 gelöst.

Diesbezügliche vorteilhafte Ausgestaltungen der Kulturanlage sind in den abhängigen Ansprüchen 28 bis 31 angegeben.

Hinsichtlich eines Computerprogrammproduktes ist die gestellte Aufgabe erfindungsgemäß durch die Merkmale der Patentansprüche 32 und 33 gelöst.

Das gattungsgemäße Verfahren dient zum Betrieb einer Kulturanlage für aquatische Pflanzen, wobei die aquatischen Pflanzen in einem gestapelten Kulturwannensystem mit aquatischer Produktionsfläche kultiviert werden, wobei die aquatischen Pflanzen durch eine zyklische und partielle Beerntung der aquatischen Produktionsfläche entnommen werden, wobei die aquatischen Pflanzen auf der aquatischen Produktionsfläche bis zur Folgeernte wieder nachwachsen. Das erfindungsgemäße Verfahren erweitert den Stand der Technik um die erfindungsgemäßen Maßnahmen, dass die Kultur durch Impfung mit aquatischen Pflanzen zunächst entlang einer sigmoidalen Wachstumskurve auf einen Bedeckungsstatus von mehr als 50% über der zuvor ermittelten sorten- und lichtabhängigen Grenzbedeckung populiert - als Population wird hierbei die Gesamtheit aquatischer Pflanzen bezeichnet, die in einer Zone oder einer Etage oder dem Kulturwannensystem vorkommt - wird, dass nach dem Populieren auf mehr als 50% Grenzbedeckung in zyklisch wiederkehrenden Zeitabständen, die als Erntezykluszeiten benannt werden, eine Menge von 5%-70% der jeweiligen Bedeckung geerntet wird, dass die Erntezykluszeiten über eine Modellierung des Wachstumsprozesses eine Temperatur, eine Kohlenstoffdioxid-Konzentration ($CO_2$) und/oder ein den aquatischen Pflanzen zugeführtes Licht als Kulturparameter vorbestimmend optimiert und in eine Steuerung einer Ernteeinrichtung oder eines Ernteverfahrens als jeweilige Steuergröße für eine Ermittlung eines optimalen Zeitpunktes zur Auslösung einer Ernte eingespeist werden. Bei einer Änderung eines oder mehrerer dieser Kulturparameter innerhalb der Kulturanlage werden der jeweilige Zeitpunkt der Ernte und/oder eine jeweilige Ernteamplitude automatisch nachgesteuert. Mit Ernteamplitude ist die bei jeder Ernte aus der Kultur entnommene Erntemenge gemeint.

Die sigmoidale Wachstumskurve wird nachfolgend auch Wachstums- bzw. Populationssigmoide oder kurz Sigmoide genannt. Diese kann gattungs- und sortenabhängig sein. Diese sigmoidale Wachstumskurve sowie die pflanzen- und/oder sortenspezifischen Parameter (Kulturparameter) für Licht, zusätzlicher $CO_2$-Zufuhr, Ernährung (Düngung) und Temperatur ist vor dem Betreiben der Kulturanlage für die verwendeten aquatischen Pflanzensorten ermittelt worden und in einem adaptiven Datenfeld in der Steuerung, beispielsweise in einem Speicherbereich der Steuerung, abgelegt. Auf dieser Basis wird die sigmoidale Wachstumskurve modelliert, wobei die Erntezykluszeiten und/oder der Bedeckungsstatus einem (exakt vorbestimmten) Sägezahnkurvenverlauf entsprechen.

Hierzu ist weiterhin erfindungsgemäß ausgestaltet, dass eine sigmoidale Wachstumskurve, die gattungs- und sortenabhängig sein kann, zuvor für die verwendeten aquatischen Pflanzensorten ermittelt wird und in einem adaptiven Datenfeld abgelegt werden, aus dem heraus dann die auf dieser Basis ermittelte Sigmoide als Wachstumskurve modelliert wird, indem die Erntezyklen bzw. der Bedeckungsstatus auf einer exakt vorbestimmten Sägezahnkurve laufen und aus der so automatisch ausgelösten Modellierung die Werte für die Erntezeitpunkte entlang der oberen Spitzenwerte einer sich ergebenden Sägezahnkurve des Bedeckungsstatus auf der Kultur in-situ automatisch angepasst werden, und in eine Steuerung der Ernte einer Ernteeinrichtung zugeleitet wird, die sodann automatisch zur Ernte ausgelöst wird. Der korrekte (=optimale) Erntezeitpunkt wird demnach mittels der Modellierung errechnet. D.h. die Modellierung erstellt die sigmoidale Wachstumskurve (bzw. die Sigmoide). Aus dieser Kurve werden die Ernteamplituden ermittelt. D.h. die Sigmoide wird in eine fortlaufende Sägezahnkurve umgesetzt und der Bereich des Nachwachsens wird parallelversetzt angereiht. Der Erntezeitpunkt und die Ernteamplitude (Erntemenge) können variieren. Die Steuerung der Ernteeinrichtung bzw. des Ernteverfahrens greift bei erkannter Variation ein und folgt dem Wachstumsverhalten der Kultur.

Mit diesem Verfahren ist es erstmals möglich, das Indoor-Verfahren so zu steuern, dass eine Anpassung eines automatischen Starts der Ernte bezüglich der Erntezeitpunkte und Erntezyklen oder der Erntemenge und eine ebenso automatische Anpassung an eine ertragsoptimierte zyklische Biomasseernte möglich ist. Wenn bspw. die Temperatur als Kulturparameter über ein vorgebbares und einstellbares Zeitintervall dauerhaft abfällt oder ansteigt und/oder die $CO_2$-Konzentration als Kulturparameter abfällt oder ansteigt und/oder das zugeführte Licht sich verändert, wird eine Anpassung des optimalen Erntezeitpunktes automatisch ermittelt und ggfs. die Erntezykluszeiten und/oder die Erntemenge automatisch angepasst. Auf diese Weise wird das Kulturwannensystem immer automatisch im Optimum betrieben. Nach Entnahme der Erntemenge entspannt die Kultur in ihrer Dichte und expandiert vom übrigen Kulturbereich wieder in den abgeernteten Bereich hinein.

In weiterer erfindungsgemäßer Ausgestaltung ist angegeben, dass die Sigmoide auf Basis einer Wachstumsgleichung für limitiertes Wachstum generiert wird, in der ein Wachstumsfaktor ri im Exponenten einer natürlichen Exponentialfunktion (e-funktion) als Produkt aus jeweils einem lichtabhängigem, einem temperaturabhängigem, einem $CO_2$-abhängigem und einem nährstoffanhängigen Term gebildet wird, der sodann in die Steuerung der für jede Ernte entnommenen Erntemenge abgelegt wird, über welchen dann die optimalen Erntezeitpunkte ermittelt werden.

Dabei lautet die Wachstumsgleichung

$$W(t) = \frac{Wmax}{2} * (tanhyp(\frac{ri0}{2} * (\prod_{T,E,N,P,CO2} ri(j)) * t + \frac{Wmax}{2}) + 1)$$

und ist eine Tangens hyperbolicus Funktion mit:

Wmax = maximal mögliche Bedeckung (sortenabhängig, und beleuchtungsabhängig),
$ri_0$ = Basis-Wachstumsrate, und
$\Pi_{T,E,N,P,CO2}$ $ri(j)$) = Produkt der einzelnen Wachstumskoeffizienten für die Kulturparameter Licht, Temperatur, $CO_2$ (Kohlenstoffdioxid-Konzentration) und Nährstoffe.

Die Wachstumskoeffizienten für die Temperatur $\alpha(ri(T))$, das zugeführte Licht $\beta(ri(E))$, die Ernährung $\gamma(ri(N, P))$, und die $CO_2$-Konzentration $\delta(ri(CO_2))$ werden als Produktregel formuliert. Die Koeffizienten $\alpha$, $\beta$, $\gamma$, $\delta$ ergeben Werte kleiner gleich 1 (< 1), vorzugsweise sind sie kleiner 1, aber nahe 1.

$$ri = ri0 * |\alpha(ri(T))| * |\beta(ri(E))| * |\gamma(ri(N,P))| * |\delta(ri(CO_2))|$$

Im Ergebnis folgt aus der Gesamtbetrachtung ein Wert kleiner gleich 1, multipliziert mit der Basis-Wachstumsrate ri0, woraus dann die effektiv nutzbare/erreichbare Wachstumsrate ri folgt.
Der Wachstumskoeffizient bezüglich der Ernährung wird aus der bekannten Michaelis-Menten-Gleichung gebildet. Die Wachstumskoeffizienten für das zugeführte Licht, die $CO_2$-Konzentration und die Temperatur sind zum Teil linear und werden aus ermittelten Ergebnissen von Pflanzversuchen verwendet.

Liegen alle Parameter Licht, $CO_2$, Temperatur und Nährstoffe im Optimum, so ist dieser resultierende, vor der Grundwachstumsrate ri0 stehende Wachstumsfaktor 1. Im Optimum aller Parameter ist die o.g. Produktgleichung auch gleich 1. Erfindungswesentlich ist, dass die Kulturanlage auch dann vorhersehbar steuerbar ist, wenn die Kulturparameter nicht im Optimum sind. Auch für diesen Fall werden erfindungsgemäß optimale Erntezeitpunkte und Ernteamplituden errechnet und die Kulturanlage bzw. die Ernteeinrichtung optimal ausgesteuert.

Aus einem zuvor ermittelten und hernach adaptiv nachgeführten Datenfeld entstammen entsprechende Startwerte. Mit fortlaufendem Kultur- und Erntebetrieb können dies Werte adaptiert werden. Das System maximiert sich dabei selbst, wenn Temperatur, $CO_2$, Nährstoffe und Licht zuvor sukzessive ins Optimum gesteuert werden.

Eine in-situ Erfassung der Inhaltstoffe der (durch die zyklische und partielle Beerntung der aquatischen Produktionsfläche) geernteten Biomasse ermöglicht eine Ermittlung von akkumulierten Schwermetallen und akkumuliertem Calciumoxalat. Um diese Schwermetall- und Calciumoxalat-Konzentrationswerte in einer zu erntenden Biomasse zu minimieren, werden die Erntezykluszeiten über die Modellierung so eingestellt, dass sich zeitlich stabile kurze Erntezyklen von 0,5 bis 5 Tagen ergeben.

Diese sind dann in Bezug auf die entnommene Biomassenmenge so eingestellt, dass die Gesamtverweilzeiten der aquatischen Pflanzen auf der aquatischen Produktionsfläche insgesamt optimal verkürzt (=minimiert) werden, so lange wie gerade notwendig ist, um maximalen Proteingehalt aufzubauen. Wichtig ist dabei, dass maximale Proteingehalte bei jungen aquatischen Pflanzen, insbesondere bei Wasserlinsen (Lemnaceae) erzielt werden.

Durch diese Verfahrensführung, bei der die Erntezykluszeiten und damit die Verweilzeiten optimal verkürzt werden, wird somit kumulativ und erfindungsgemäß erreicht, dass bei gleichzeitig hohem Proteingehalt die Akkumulationszeit für Schwermetalle und Calciumoxalat deutlich verringert wird.

Mit der Erfindung ist dieser kumulative Effekt technisch durch die Maßnahmen der Verfahrensführung erzielt worden.

Um eine solche schnelle Propagation von Biomasse zu unterstützen, ist weiterhin vorgeschlagen, dass die im Verfahren in die Kultureinrichtung nachgeführte Nährlösung genauso austariert ist, dass die nachgeführte Nährstoffmenge in allen Makro, Oligo- und Mikronährstoffen so eingestellt ist, dass sie entlang der Erntezykluszeiten ($\Delta$t) genau der jeweiligen Zehrung im Kultursystem entspricht. Dies unter der weiteren kumulativen Bedingung, dass gleichzeitig das Nährstoffniveau bei Stickstoff bspw. bei circa 1+/- 0,2 mMol/l Kulturflüssigkeit liegt. Eine auf die tägliche Zehrung angepasste Kulturführung unterdrückt außerdem effektiv die unerwünschte kompetitive Algen-Co-Population.

Von diesem Stickstofflevel werden sodann die übrigen Makroelemente N, P, K, sowie des Oligoelemente Mg (Stickstoff N, Phosphor P, Kalium K, Magnesium Mg) im molaren Verhältnis eingestellt, und zwar

$$3/1 \leq N/P \leq 10/1$$

$$2/1 \leq N/K \leq 4/1$$

$$10/1 > N/Mg > 5/1.$$

Die Einstellung dieser Nährstoffverhältnisse löst ein weiteres Problem, nämlich das der Unterdrückung der Algen-Co-Population. Eine Unterdrückung der Algen-Co-Population maximiert ebenfalls den Biomassenertrag der gewünschten aquatischen Pflanze, wie bspw. der Lemnaceae.

Dazu sind kumulativ zwei Maßnahmen erforderlich. Die Einhaltung der oben genannten "molaren" Nährstoffverhältnisse, sowie eine an jedem Tag mehrmalig gesteuerte Nachführung der Nährstoffe auf kleinem Absolut-Niveau, was möglichst genau der aktuellen Zehrung der Kultur entsprechen muss. Daraus resultiert zum einen, dass es keine Akkumulation von Nährstoffen in der Kultur gibt, und zum anderen, dass so das Algenwachstum zurückgedrängt wird. Eine begleitende Algenpopulation setzt die Erntemenge der Wasserlinsen herab. Liegt das Nährstoffniveau auf niedrigem, der Zehrung der Lemna angepassten Niveau, ist die Nährlösung pH stabiler, um den Wert 6,0 bis 7,0. In diesem Bereich überpopuliert die Wasserlinse (Lemnaceae) die Alge.

In weiterer vorteilhafter Ausgestaltung ist angegeben, dass die Sigmoide auf Basis einer Wachstumsgleichung für limitiertes Wachstum generiert wird, in der ein Wachstumsfaktor ri im Exponenten einer E-funktion als Produkt aus jeweils einem lichtabhängigem, einem temperaturabhängigem, einem $CO_2$-abhängigem und einem nährstoffanhängigen Koeffizienten gebildet wird, multipliziert mit einer Basis-Wachstumsrate ($ri_0$), was sodann in die Steuerung der für jede Ernte entnommenen Erntemenge abgelegt wird, über welchen dann die optimalen Erntezeitpunkte über die Steuerungsgleichung ermittelt werden.

So ist das System in Bezug auf die Erntemenge und Qualität der Erntemasse automatisch vollumfänglich steuerbar.

In weiterer vorteilhafter Ausgestaltung ist angegeben, dass der Proteingehalt in der Kultur weiterhin eingestellt wird, indem Stichproben genommen, und hernach als Koeffizienten der Steuerungsgleichung angepasst werden. So ist das System nicht nur ins Optimum fahrbar, sondern nach gewünschten Maßgaben auch in bspw. Proteinqualität beeinflussbar.

Weiterhin ist angegeben, dass sowohl Schwachlichtzonen als auch Starklichtzonen integral in jeweils jeder Kulturwanne des Kulturwannensystems integriert sind. Mit zugeführtem Licht ist eine Lichtmenge, bzw. Ausleuchtungsmenge bzw. Beleuchtung der aquatischen Pflanzen gemeint. Bevorzugt ist das zugeführte Licht bezogen auf "$\mu Mol/m^2 s$", also eine quantenmechanische Photonenflussdichte. Die Angabe "$\mu Mol/m^2 s$ PAR (Englisch für: Photosynthetic Active Radiation) ist dabei wie folgt zu verstehen: $\mu Mol$ bezieht sich auf eine tatsächliche (zählbare) Anzahl von Photonen; $m^2$ ist die ausgeleuchtete Fläche (der das Licht zugeführt wird) und s sind Sekunden. Die so angegebene Photonenflussdichte kann per Steuerung der Ernteeinrichtung gut definiert werden, weil bspw. eine Anzahl X von Photonen eine ADP-ATP Umwandlung erzeugen. So errechnet man die mit der verfügbaren Photonenflussdichte in der bestrahlten Kultur maximal erzeugbaren Biomassensynthese, Hintergrund dazu ist die quantenmechaniche Behandlung der Photosynthese. Beispielsweise ist die Starklichtzone im Ausleuchtungswert bei > 40 $\mu molsec^{-1} m^{-2}$ (=$\mu Mol/m^2 s$) und die Starklichtzone liegt entweder in oder vor der besagten Partial-Beerntungszone. Lediglich einzelne Spektrallinienintensitäten können in anderen Einheiten, beispielsweise in $mW/m^2$ angegeben sein.

In dieser erfindungsgemäßen Weise wird also durch in-situ-Anpassung der Erntemenge, diese an den Proteinoptimierungsprozess angepasst. Sowohl die Ernährung der aquatischen Kulturpflanzen als auch der Betrieb einer Zusatzbeleuchtung (als Steuergröße) wird so angepasst, dass vorbestimmbare Aminosäurespektren in der geernteten Biomasse generiert werden.

Die verschiedenen Ausleuchtungszonen, in denen bevorzugt sowohl Globalstrahlung als auch Kunstlicht miteinander gemeinsam vorliegen können, liegen bevorzugt innerhalb einer bzw. innerhalb jeweils jeder Kulturwanne derart vor, dass sich sowohl Schwachlichtzonen als auch Starklichtzonen in jeder Kulturwanne ergeben können.

Sowohl Schwachlichtzonen, die zur reinen Propagation einer hohen Individuenzahl durch Sprossung, als auch die entsprechenden Starklichtzonen zur Massen- und Proteinausreife, sind bevorzugt innerhalb jeweils derselben längenerstreckten Kulturwanne integriert.

D.h. Schwachlichtzonen und Starklichtzonen sind so vorzugsweise nicht mehr in unterschiedlichen Kulturwannen (des gleichen Kulturwannensystems) mit unterschiedlicher Lichtqualität und Lichtquantität, sondern innerhalb jeweils einer längenerstreckten Kulturwanne gemeinsam integriert. Dies erfolgt dabei so, dass an einem Ende der Kulturwanne bspw. mit einer Längenerstreckung von 33 % der Gesamtlänge, die Kultur dort lokal mit Starklicht beaufschlagt wird bspw. mit einer hilfsweisen LED-Kunstlichtausleuchtung in PAR-Wellenlängenbereichen (PAR Wellenlängen sind die für die Photosynthese relevanten Wellenlängen bei ca. 350 nm und 680 bis 700 nm). Die Starklichtausleuchtung liegt bei einer schwachlichttoleranten Pflanze allerdings bereits bei 80-100 $\mu$molsec$^{-1}$ m$^{-2}$, was bei vielen anderen Pflanzen schon ausgeprägtes Schwachlicht ist. Um jedoch optimales Wachstum zu erzielen und eine lichtbedingte Limitierung von sich bereits teilweise übereinander schiebenden Fronds zu erzielen erweist sich eine Ausleuchtung in der LED-Kunstlichtzone von 125-160 $\mu$molsec$^{-1}$m$^{-2}$ als vorteilhaft.

Der übrige, bspw. 67 % große, Anteil der Längenerstreckung der jeweiligen Kulturwanne oder -wannen, ist in der Stapelanordnung entweder nur mit Globalstrahlung ausgeleuchtet oder mit einer schwächeren Ausleuchtung (=zugeführtes Licht) als in den Starklichtzonen.

Die Erfindung macht sich dabei die Erkenntnis zunutze, dass die Stickstoffaufnahme abhängig von der verfügbaren Lichtmenge ist. Mit Bezug auf die ausgeprägte Schwachlichttoleranz von Lemnaceae (Wasserlinsen) bedeutet dies aber, dass der Photosynthese-Wirkungsgrad beim Lemnaceae hoch ist, bzw. sein muss.

Die Integration von Starklichtzonen und Schwachlichtzonen in ein und derselben jeweiligen Kulturwanne, folgt aus dem durch Messungen mehrfach bestätigten überraschenden Effekt, dass wenn die besagten Lemnaceae aus einer mit Schwachlicht beaufschlagten Kulturwanne in eine gesonderte, mit Starklicht beaufschlagte separate Kulturwanne durch Floating oder dergleichen überführt wird, bereits geringe Unterschiede in der Nährlösungskonzentration, und/oder in der Leitfähigkeit und/oder des pH-Wertes genügen, um eine weitere Propagation der Lemnaceae für bis zu 72 Stunden zu hemmen. Aus diesem Grund hat es sich gezeigt, dass es vorteilhaft ist, wenn die Starklichtzone in demselben Kulturwasserkörper einer jeweils einzigen Kulturwanne bleibend, diffusionsschlüssig mit der Schwachlichtzone verbunden ist.

Wird die Lemnaceae nach bspw. jeweils 3 Tagen durch vollständiges Abskimmen lediglich der Bedeckung in der Starklichtzone beerntet, so können die in der Schwachlichtzone verbleibenden Lemnaceae durch weiteres Nachwachsen durch Sprossung wieder in die Starklichtzonen expandieren.

Dies hat sogleich zwei wichtige Effekte. Zum einen sorgt die Entspannung der Populationsdichte in der Schwachlichtzone zu einer enormen Wachstumsanregung und zum anderen wächst die Population von Ernte zu Ernte schrittweise ganz von der Schwachlichtzone in die Protein- und Massenreife selbsttätig durch Expansion nach.

In weiterer vorteilhafter Ausgestaltung ist angegeben, dass die besagte Beleuchtung (=zugeführtes Licht als Kulturparameter bzw. Steuergröße) in der Zone der zyklischen partiellen Beerntung eingesetzt wird, d.h. dort wo die zyklische Partialbeerntung stattfindet, derart, dass die dort eingesetzte Beleuchtung sowohl in der Lichtquantität als auch in der Lichtqualität an die zu erzielende Biomassenmenge und an den Protein- und/oder Stärkegehalt angepasst wird, indem die Lichtquantität wellenlängenselektiv geregelt wird.

Mit der Erkenntnis, dass die optimale Nährstoffzusammensetzung eine Frage der Beleuchtungsverhältnisse in der jeweiligen Etage des Etagenkultursystems ist, lässt sich somit finden, dass Arealen gleicher Ausleuchtung auch gleiche Nährstoffspektren zugeführt werden.

In weiterer alternativer Ausgestaltung ist angegeben, dass die besagte Beleuchtung in der Zone eingesetzt wird, die der zyklischen partiellen Beerntungszone vorgeordnet ist, so dass die aquatischen Pflanzen zuerst durch die Starklichtzonen hindurch expandieren, bevor sie vor der Beerntung nochmals in einer Schwachlichtzone zu maximaler Proteinsynthese angeregt werden. Dies kann für bestimmte Sorten für die Proteinsynthese spezifisch gelten.

In weiterer vorteilhafter Ausgestaltung ist angegeben, dass die Stellgröße "zugeführtes Licht" mittels der Stellparameter "Lichtqualität" und "Lichtquantität", zur Erzielung optimierter zielbedarfsgeregelter Protein- und/oder Stärkegehalte in der Biomasse in einer in-situ Messung von Proben der geernteten Biomasse, oder aus Stichproben von entnommener Biomasse aus der Zone der Beerntung, ermittelt werden, und hernach die Lichtqualität und Lichtquantität, über die so ermittelten Stellparameter von der Steuerung der Ernteeinrichtung an die gewünschte Biomassenqualität angepasst und gesteuert werden.

Dies umfasst gleich zwei Wirkungen, nämlich die Ausleuchtung mit Globalstrahlung (Sonnenlicht) oder eine teilweise oder gänzliche Ausleuchtung mit Leuchtdioden. Damit wird ausgenutzt, dass das Regalsystem von oben nach unten in der reinen Globalstrahlungsausleuchtung abnimmt, und ggfs. zumindest bei Erreichen einer Mindestschwelle für eine pflanzenphysiologische Schwachlichttoleranz, zusätzlich oder ersatzweise mit einer pflanzenphysiologisch, d.h. nach Wellenlänge und Energiedichte angepassten Kunstbeleuchtung ausgeleuchtet wird.

Hierbei ist von Bedeutung, zu berücksichtigen, dass die physiologischen Photosynthese-Systeme der eingesetzten aquatischen Pflanzen, insbesondere Lemnaceae (Wasserlinsen) auf bestimmte Wellenlängen reagieren, die insbesondere zum einem im Bereich von ca. 350 nm und bei ca. 700 nm liegen, und dazwischen liegende weitere spezifische Wellenlängen. Auf diese ist die Kunstlichtausleuchtung zu adaptieren.

In weiterer vorteilhafter Ausgestaltung ist angegeben, dass die Kulturwannen jeweils längserstreckte Wannen sind, bei welchen die Beerntungszonen jeweils an mindestens einem Ende der Wannen angeordnet sind, und dass sich die besagte, in Lichtqualität und Lichtquantität steuer- oder regelbare Beleuchtung der Kulturwannen auf diese Beerntungszonen, oder in die Mitte der Länge der Kulturwannen gerichtet sind.

In weiterer vorteilhafter Ausgestaltung ist angegeben, dass zusätzlich zur Steuerung der Lichtqualität und Lichtquantität, die Ernährung der aquatischen Pflanzenkultur durch eine Steuerung der Zugabe der Makronährstoffe Stickstoff, Phosphor und Kalium über eine Nährlösung in der Art erfolgt, dass die Konzentrationen der zugegebenen Makronährstoffe an die Lichtqualität und/oder die Lichtquantität solange angepasst wird, bis die jeweils erwünschten optimierten Protein- und/oder Stärkewerte erzielt werden.

Weiterhin ist vorteilhaft ausgestaltet, dass zusätzlich das Verhältnis von in die Nährlösung zugegebenem Ammonium-Stickstoff ($NH4^+$) zu zugegebenem Nitrat-Stickstoff ($NO3^-$) angepasst wird, derart, dass der Nitrat-Stickstoffanteil gegenüber dem Ammonium-Stickstoffanteil überwiegt und dass das Phosphor/Stickstoff-Verhältnis zwischen 1/20 und 1/5 respektive zur eingesetzten aquatischen Pflanzensorte eingestellt wird.

In weiterer vorteilhafter Ausgestaltung ist angegeben, dass zusätzlich die Zugabe des Oligo-Nährstoffes Magnesium und/oder von Sulfaten, an die oben beschriebene Betriebsweise angepasst wird. Die macht deshalb Sinn, weil die Aufnahme dieser Nährstoffe u.a. bei einem optimierten Photosynthese-Wirkungsgrad hilfreich sind.

Gleiches gilt natürlich auch für die Spurenelemente, nämlich dass die zusätzliche Zugabe der Spurenelemente Zink und/oder Kupfer und/oder Molybdän und/oder Mangan und/oder Eisen angepasst wird.

In weiterer vorteilhafter Ausgestaltung ist angegeben, dass die zusätzliche Zugabe von $CO_2$ in den Gasraum der Kulturanlage bis zu einem Konzentrationswert von < 5.000 ppm erfolgt und geregelt wird.

In weiterer vorteilhafter Ausgestaltung ist angegeben, dass alternativ oder zusätzlich zur Gabe von Kohlenstoffdioxid, Kohlensäure über die Nährlösungszufuhr entgasend oder direkt ins Kulturwasser zugegeben wird.

In weiterer vorteilhafter Ausgestaltung ist angegeben, dass die Nährlösung und/oder das Kulturwasser durch die Zugabe einer wässrigen Calciumcarbonat-Lösung im pH-Wert so aufgepuffert bzw. im pH-Wert eingestellt wird, dass ein pH-Wert im Kulturwasser zwischen 5,5 und 8,0 eingestellt wird.

Weiterhin ist vorteilhaft ausgestaltet, dass das Kultursystem bei einer Temperatur des Kulturwassers zwischen 20 und 30°C betrieben wird. Das Wachstumsoptimum wird bei einer Optimal-Temperatur des Kulturwassers von 29°C erreicht. Bevorzugt wird diese Temperatur als Zielgröße angefahren. Eine Absenkung der Temperatur auf ca. 20°C (Nachtabsenkung) während einer Dunkel-Phase ist für den Biomassenertrag nicht nachträglich, bietet allerdings für die benötigte Gesamtenergie zur Kulturführung daher ein Einsparungspotential.

In vorteilhafter Weise ist angegeben, dass als Kulturpflanzen Lemnaceae spp eingesetzt werden der Gattung Spirodela polyrhiza, und/oder Landoltia punctata, und/oder Lemna minor L., und/oder Lemna gibba, und/oder Wolffiella hyalina, und/oder Wolffia microscopica, und/oder Hybriden aus mindestens zwei der Gattungen. Die Anwendung des anmeldegemäßen Verfahrens eignet sich für alle Gattungen (Arten) von Lemnaceae: Diese sind: Lemna, Spirodela, Wolffia, Wolfiella, Landolthia, sowie mögliche Kreuzungen unter den Gattungen.

Für alle diese Spezies gilt, dass alle Aminosäuren enthalten sind, aber allen voran die wichtigen essenziellen Aminosäuren in den genannten Wasserlinsen vertreten sind.

Zu den ernährungsphysiologisch wichtigsten, also essenziellen Aminosäuren gehören:

- Metheonin
- Threonin
- Valin
- Leucin
- I-Leucin
- Phenylalanin
- Lysin

Daneben auch bspw. Glutaminsäure, Glycin und Asparginsäure. Diese sind sämtlich in den genannten Spezies vertreten.

Es ist auch von besonderer Bedeutung, dass es zwischen der Aufnahme von Stickstoff und der einfallenden Lichtqualität und Lichtquantität Zusammenhänge gibt. Da für die Proteinsynthese, wie eben schon erwähnt, der Stickstoff maßgebend und physiologisch begrenzender Faktor ist, bedarf es entsprechend einer hinreichenden Ausleuchtung, im Wesentlichen auf die fotosynthetisch wirksamen Wellenlängen bezogen. Hinreichend bedeutet hier überraschenderweise, hinreichend aber immer noch Schwachlichtbedingungen.

Die Schwachlichttoleranz der Lemnaceae zeigt hier eine hohe Effizienz, bezogen auf den Photosynthese-Wirkungsgrad. Diese Schwachlichttoleranz-Eigenschaft ist schon in freier Natur zu beobachten, wo Lemnaceae (Wasserlinsen) in noch extrem schattigen Arealen sehr gut propagieren.

In vorteilhafter Weise ist angegeben, dass zumindest jede einzelne Kulturwanne sortenrein mit jeweils nur einer einzigen Lemnaceae-Sorte betrieben wird. Damit wird erzielt, dass lediglich ein einziger Wachstumsgradient in der Kultur vorliegt, denn eine Mischsortenkultivierung führt zu einer konkurrierenden Propagation, die für den Gesamtertrag nachteilig wäre.

In weiterer vorteilhafter Ausgestaltung ist angegeben, dass für die Herstellung von proteinmaximierter Biomasse und/oder Protein-Isolaten, das beschriebene Kulturverfahren in den Protein-Isolat-Herstellungsprozess so mit einbezogen und adaptiert wird, dass zur in-situ Anpassung der Erntemenge der aquatischen Biomasse an den Protein-Isolat-Herstellungsprozess sowohl die Ernährung der aquatischen Kulturpflanzen als auch der Betrieb der besagten Zusatzbeleuchtung so angepasst wird, dass vorbestimmte Aminosäurespektren, d.h. Aminosäureverteilungen in der geernteten Biomasse generiert werden.

Weiterhin ist vorteilhaft ausgestaltet, dass zum Erhalt definierter optimierter Aminosäurespektren die Kulturwannen von definierbaren Arealen des Kultursystems mit jeweils einer konstanten Lichtqualität und jeweils einer konstanten Nährstoffversorgung beaufschlagt werden. Hieran ist vorzugsweise auch die Stickstoffversorgung anzupassen.

In weiterer vorteilhafter Ausgestaltung ist angegeben, dass eine konstante Nährstoffversorgung in einem definierbaren Areal ein konstantes Verhältnis von Mikro- und Makronährstoffen meint. Im Detail können die Absolutbeträge bspw. des NH4+/NO3- -Verhältnisses verändert werden, wodurch sich die jeweiligen Absolutbeträge in der Konzentration der übrigen Nährstoffe mit ändern, derart dass aber die molaren Verhältnisse der Nährstoffe untereinander sich wieder im angegebenen Bereich befinden. So kann zur Unterdrückung einer unerwünschten Algen-Co-Population, das molare Verhältnis von NH4+/NO3- von 1/9 eingestellt werden und eine Gesamtstickstoffkonzentration auf einen Zielwert von ca. 1,0 +-0,2 mMol/l eingestellt werden. Ferner ist es dann auch möglich, dass abweichend vom genannten Zielwert das molare Verhältnis von NH4+/NO3- von 1/9 zumindest temporär über einen oder mehrere Tagen hinweg auf 2/8 umgesteuert wird, bei gleicher Gesamtstickstoffkonzentration, sobald eine in-situ Analyse einen Anstieg der Calciumoxalatkonzentration in der geernteten Biomasse zeigt, und/oder die Calciumoxalatkonzentration in der Biomasse abgesenkt werden soll. Dabei kann es sehr vorteilhaft sein, dass diese Umsteuerung des molaren Verhältnisses von NH4+/NO3- von 1/9 auf 2/8 alternierend vorgenommen wird. Dies bedeutet über jeweils einen oder mehrere Tage hinweg.

Weiterhin ist vorteilhaft ausgestaltet, dass eine konstante Lichtqualität eine konstante Auswahl von Wellenlängen meint.

In weiterer vorteilhafter Ausgestaltung ist angegeben, dass die Aminosäurespektren in Bezug auf Lichtqualität und Nährstoffspektrum für jedes beschriebene Areal voranalysiert und hernach, durch Konstanthalten der jeweils optimierten Lichtqualität und Nährstoffspektren geregelt wird. Um dieses Optimum jedoch zu finden wird zunächst eine temporäre Variation der Gesamtlichtmenge oder des Integrals über das gesamte Spektrum PAR (photosynthetic active radiation) vorgenommen, und das Energieverhältnis E(440)/E(680) in mW/m$^2$ zwischen der blauen Linie bei 440 nm und der roten Linie bei 680 nm zwischen 0.2 und 1,0 eingestellt, solange bis das gewünschte Optimum in der Biomasse erzielt wird, und die eingestellte Lichtqualität und Lichtquantität weiterhin im Optimum konstant gehalten wird

Weiterhin ist vorteilhaft ausgestaltet, dass zusätzlich zumindest in den mit Globalstrahlung oder mit Kunstlicht ausgeleuchteten Arealen in den aktiven Beleuchtungszeiten ein Temperaturgang durch Beheizung oder Kühlung gefahren wird, der regelungstechnisch auf eine konstant optimierte Kultur- und Lufttemperatur abzielt.

Weiterhin ist vorteilhaft ausgestaltet, dass die relative Feuchte durch Belüftung, Heizung und aktive oder passive Kondensation zumindest konstant geregelt wird.

In letzter vorteilhafter Ausgestaltung ist angegeben, dass der $CO_2$-Gehalt ebenfalls mit in die Optimierung der Aminosäurespektren und des Biomassenertrages mit einbezogen und ausgesteuert wird.

Im Hinblick auf eine Einrichtung der gattungsgemäßen Art, wird eine automatisch gesteuerte Kulturanlage für aquatische Pflanzen vorgeschlagen, wobei die aquatischen Pflanzen in einem gestapelten Kulturwannensystem mit aquatischer Produktionsfläche kultiviert werden, wobei die aquatischen Pflanzen durch eine zyklische und partielle Beerntung der aquatischen Produktionsfläche entnommen werden, wobei die aquatischen Pflanzen auf der aquatischen Produktionsfläche bis zur Folgeernte wieder nachwachsen. Die Kulturanlage (=Einrichtung) umfasst erfindungsgemäß, dass die Kulturwannen des Kulturwannensystems mit einem Nährstoffinjektionssystem versehen sind, wobei das Nährstoffinjektionssystem über einen Steuercomputer mengenmäßig steuerbar ist, dass die Kultur durch Impfung mit aquatischen Pflanzen zunächst entlang einer Wachstumssigmoide (= sigmoidale Wachstumskurve) auf einen Bedeckungsstatus von mehr als 50% über der zuvor ermittelten sorten- und lichtabhängigen Grenzbedeckung populierbar ist, und dass hernach in zyklisch wiederkehrenden Zeitabständen die als Erntezykluszeiten benannt werden, eine Menge von 5%-70% der jeweiligen Bedeckung über eine Erntevorrichtung erntbar ist, und dass die Erntezykluszeiten über eine Modellierung des Wachstumsprozesses innerhalb des Steuercomputers die Kulturparameter Temperatur, $CO_2$-Konzentration, Licht vorbestimmend optimierbar und in die Ansteuerung der Ernteeinrichtung einfließen, und dass bei einer Änderung eines oder mehrerer dieser Kulturparameter innerhalb der Kulturanlage, der jeweilige Zeitpunkt der Ernte und/oder eine jeweilige Ernteamplitude automatisch nachsteuerbar sind.

In weiterer vorteilhafter Ausgestaltung ist angegeben, dass die sigmoidale Wachstumskurve für die verwendeten aquatischen Pflanzensorten in einem adaptiven Datenfeld abgelegt werden, aus dem heraus dann im Steuerungscomputer die auf dieser Basis ermittelte Sigmoide als Wachstumskurve modellierbar ist, indem die Erntezyklen bzw. der Bedeckungsstatus auf einer exakt vorbestimmten Sägezahnkurve laufen, und aus der so automatisch ausgelösten Modellierung die Werte für die Erntezeitpunkte entlang der oberen Spitzenwerte der Sägezahnkurve in-situ automatisch anpassbar ist und in die Steuerung der Ernteeinrichtung eingehen.

In weiterer vorteilhafter Ausgestaltung ist angegeben, dass in den Kulturwannen über Sensoren eine in-situ-

Erfassung der Inhaltsstoffe der geernteten Biomasse die Ermittlung von akkumulierten Schwermetallen und akkumuliertem Calciumoxalat ausführbar ist, um diese Konzentrationswerte in der Biomasse zu minimieren, und daraufhin die Erntezykluszeiten über die Modellierung so einstellbar ist, dass sich stabile kurze Erntezyklen von 0,5 bis 5 Tagen ergeben.

Weiterhin ist vorteilhaft ausgestaltet, dass die Erntezykluszeiten und damit die Verweilzeiten optimal verkürzbar sind, derart, dass bei gleichzeitig hohem Proteingehalt die Ackumulationszeit für Schwermetalle und Calcium-Oxalat deutlich verringerbar ist.

In letzter vorteilhafter Ausgestaltung ist angegeben, dass die Kulturanlage mit einem integrierten Browser versehen ist.

Im Hinblick auf ein Computerprogrammprodukt zur Steuerung einer automatischen Kultureinrichtung nach einem der Ansprüche 27 bis 31, die nach einem Verfahren nach einem der Ansprüche 1 bis 26 betrieben wird, besteht der Kern der Erfindung darin, dass das Computerprogrammprodukt als volatiles Steuerungsprogramm ausgelegt wird, in dem die charakteristischen, auf die jeweils verwendeten Pflanzengattungen und oder -Sorten bezogene Daten der jeweiligen sigmoidalen Wachstumsparameter in einem aktualisierbaren Programmtool abgelegt sind.

Hierzu ist weiter ausgestaltet, dass das Computerprogrammprodukt mit dem Steuerungssystem und dem Browser der Kultureinrichtung zusammenwirkend ein Fernsteuerungs- und/oder Fernwartungstool enthält.

Ein Ausführungsbeispiel der Erfindung ist in der Zeichnung angegeben, und nachfolgend näher beschrieben.

Es zeigt:

Figur 1: eine perspektive Ansicht einer gestapelten Kulturwannenanordnung,

Figur 2: eine schematische Seitenansicht einer gestapelten Wannenanordnung, und

Figur 3: eine Steuerung der Kultureinrichtung

Figur 4: eine Wachstumssigmoide mit Erntezeitpunkten und Ernteamplituden

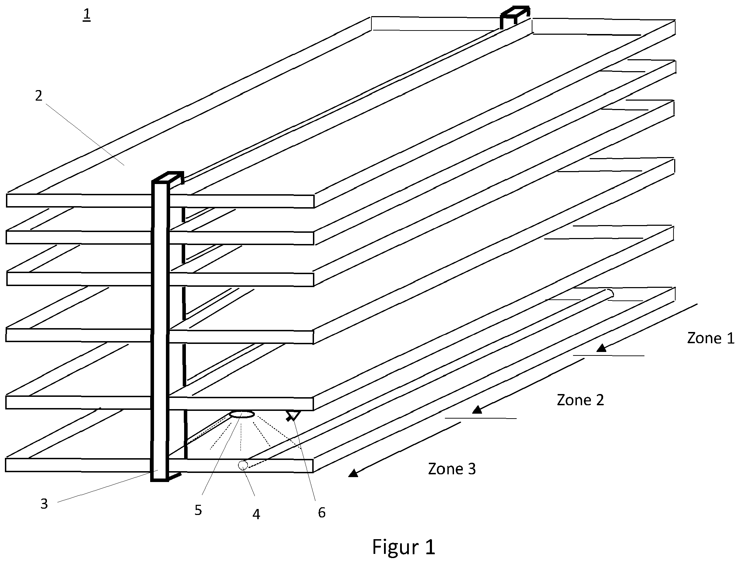

Figur 1 zeigt eine perspektivische Ansicht der aquatischen Kulturwannenanordnung 1 mit gestapelten Kulturwannen 2, wobei die Kulturwannen 2 einen entsprechenden Höhenabstand zueinander haben, damit an den Kulturen ggfs. auch gearbeitet werden kann und außerdem auch noch entsprechend reduziertes Licht aus der Globalstrahlung einfallen kann. Die Kulturwannen 2 sind mit Nährlösung (Kulturwasser) gefüllt und bspw. mit Lemnaceae (Wasserlinse) besetzt. Die gesamte Anordnung 1 ist wiederum in einem Gewächshaus, als Indoor-Kultursystem, angeordnet.

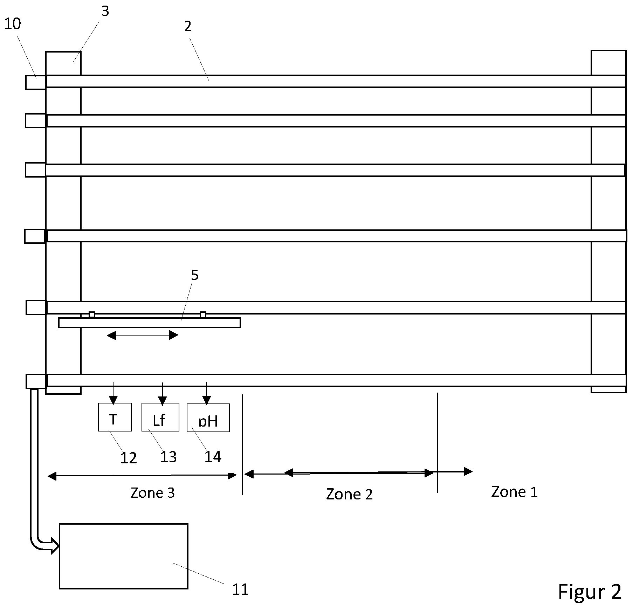

Exemplarisch für alle Kulturwannen 2 ist an der unteren Wanne dargestellt, dass die Kulturwannen 2 zusätzlich mit einer Hilfsausleuchtung 5 versehen sind, die sowohl in der Lichtqualität (Wellenlängen, Wellenlängenmischungen) als auch in die Lichtquantität einstellbar ist. Die übrigen Kulturwannen 2 haben ebenfalls die (nicht dargestellte) Hilfsausleuchtung 5. Diese Hilfsausleuchtung 5 ist dazu eingerichtet, Licht zu den Kulturwannen 2 und damit zu der aquatischen Produktionsfläche zuzuführen. Diese Hilfsausleuchtung 5 wird von einer Steuerung gesteuert. Vorzugsweise wird nur die sogenannte Maturationszone (Zone 3), d.h. die in Figur 1 und 2 gekennzeichnete Kulturfläche (=Produktionsfläche) einer jeden Wanne 2 mit der Hilfsausleuchtung 5 beleuchtet. Von dieser wird auch geerntet. Die übrigen Zonen (Zone 1 und Zone 2 der Figuren 1 und 2) sind ausgeprägte Schwachlichtzonen, in denen die genannten aquatischen Pflanzen zur Sprossung (vegetative Vermehrung) angeregt werden. Auf der jeweiligen Maturationszone jeder Wanne wird vorzugsweise auch die partielle Ernte vorgenommen.

Erfindungsgemäß muss die ausgeleuchtete Zone sich nicht über die gesamte Länge der Kulturwanne 2 erstrecken, sondern die Kulturwanne 2 als solche ist imaginär in Zonen eingeteilt, die aber kulturwasserschlüssig miteinander verbunden sind, bzw. fließend ineinander übergehen.

Ferner ist dargestellt, dass die Kulturwannen 2 direkt beheizbar sind durch ein bspw. Warmwasser führendes Schlauchsystem 4, über das ggfs. auch zumindest ein Teil der Nährlösung für die Kulturen mit eingeleitet wird, bspw. durch Diffusionsöffnungen. Damit kann der Kulturparameter Temperatur mittels der Steuerung gesteuert werden.

Zusätzlich oder optional sind Nährlösungssprüher 6 über den jeweiligen Wannen 2 so angeordnet, dass zumindest ein Teil der Nährlösung und/oder Konditioniermittel wie bspw. hygienisierende Substanzen oder Algizide aufgesprüht werden können.

Figur 2 zeigt eine Seitenansicht der schematischen Darstellung der Kulturwannenanordnung 1. In dieser Darstellung sind jeweils an einem Ende der Kulturwannen 2 die Ernteskimmer 10, für das Abskimmen der Wasserlinsen angeordnet. Es kann aber auch an beiden gegenüberliegenden Seiten abgeskimmt, d.h. geerntet, werden.

Vorgesehen sind grundsätzlich nur Partialbeerntungen der Kulturwannen 2 gemäß dem eingangs genannten Stand der Technik. Bspw. wird dabei in regelmäßigen Zyklen ein Drittel der Längserstreckung der Kulturwanne 2 abgeskimmt. Es können tägliche Partialbeerntungen vorgenommen werden oder auch im 2-, 3-, oder mehrtägigen Rhythmus.

Da eine Kulturanlage aus einer Vielzahl solcher in Figur 1 und 2 dargestellten Etagenanordnungen nebeneinander platziert besteht, die in einem geschlossen Gewächshaus installiert sind, lassen sich die Etagensysteme auch zeitversetzt beernten, so dass beispielsweise bei einem 3-Tages-Partialernte-Rhythmus immer Sektionen von Stellagen beerntet werden, am Folgetag eine andere, und am dritten Tag wieder eine andere.

So wird bezogen auf die jeweilige Kultur zwar der 3-Tages-Partialernte-Rhythmus immer eingehalten, aber dennoch produziert das gesamte System beerntete Biomasse an jedem Tag.

Figur 2 zeigt deutlich die erfindungsgemäße Platzierung einer Zusatzbeleuchtung mittels wellenlängenmäßig und intensitätsmäßig steuerbaren Hilfsausleuchtungen 5, bspw. Leuchtdioden-Anordnungen. Diese wiederholt sich in jeder Kulturwanne 2.

Wie auch hier zu erkennen ist, ist die gesamte längserstreckte Kulturwanne 2 in drei Zonen eingeteilt. Zone 1 ist die hinterste Zone am rechten Bildrand. Zone 2 ist die mittlere Zone. Zone 3 ist die Zone direkt vor dem Ernteskimmer 10.

Beerntet wird die Zone 3, bspw. mit einem hier nicht dargestellten Schieber, der die Wasserlinsen zum Skimmer 10 schiebt, der die Biomasse dann nach unten abfließen lässt. Als Alternative zum Schieber kann auch ein sogenannter Luftbesen eingesetzt werden, der die Wasserlinsen über die Skimmingkante ausschiebt.

Bei diesem ersten Ausgestaltungsbeispiel ist die Leuchtdioden-Anordnung 5 in der letzten Zone 3 platziert, so dass die Wasserlinsen in dieser Zone quasi direkt vor der Ernte und einer ggfs. gesteuerten Beleuchtung mit Zusatzlicht stehen.

Hierzu muss man folgendes berücksichtigen.

Wenn die Zone 3 durch einen Schieber und anschließendem Skimming beerntet wird, expandiert die Wasserlinsenkultur von Zone 2 und Zone 1 in die abgeskimmte, und somit entleerte Zone 3, weil der Schieber zur Schieberichtung einen Sog erzeugt, der die gesamte Kultur mit in die beerntete Zone 3 mit hineinzieht. Somit entspannt sich die Populationsdichte sofort auf der ganzen Länge der Kulturwanne 2.

Dies bewirkt physiologisch, dass die Wasserlinsenkultur durch die Ausdünnung der Populationsdichte zur Nachpopulation somit erheblich stimuliert wird. Die Kultur wird also damit nicht nur partial beerntet, sondern in der Populationsdichte soweit entspannt, dass die Populationsrate im maximalen Gradienten der Wachstumssigmoide bleibt und so optimal nachwächst.

Bei einer Ausleuchtung der Zone 3 gemäß Figur 2 erhält die Wasserlinse nach ihrem Populationsgang entlang der gesamten Kulturwannenlänge im letzten Abschnitt eine finale erhöhte Lichtmenge.

Da die Kultivierung und die finale Proteinoptimierung abhängig von der Spezies sind, also von der Wasserlinsengattung und -sorte, ist erfindungsgemäß weiter ausgestaltet, dass die mit der Zusatzbeleuchtung 5 beleuchtete Zone nicht obligatorisch die Zone 3 sein muss. Vielmehr ist zu erwarten, dass bestimmte Spezies dann ein Optimum an finaler Protein-Synthese betreiben, wenn sie zunächst mit der Zusatzbeleuchtung 5 bspw. in der Zone 2 belichtet werden, aber hernach bis zur Ernte in Zone 3 nochmals eine Schwachlichtphase durchlaufen.

Bei diesem Beispiel wäre die Zusatzbeleuchtung 5 in der Mitte, also in Zone 2 zu platzieren bzw. hineinzuverschieben.

Möglich ist es auch die Zusatzbeleuchtung 5 in Zone 1 zu platzieren.

Eine sensorische Messung von Temperatur und/oder Leitfähigkeit und/oder pH-Wert erfolgt insbesondere, aber nicht ausschließlich, in der dargestellten Zone 3.

Für den Fall, dass an beiden Enden der längserstreckten Wanne geerntet wird, kann auch an beiden Enden gemessen oder in der oben beschrieben Weise beleuchtet werden.

Bei einer solchen Ausgestaltung ließe sich die o.g. alternative Ausleuchtungsbedingungen realisieren, indem die beleuchtete Zone in der Mitte liegt und die Beerntungszonen an beiden gegenüberliegenden Zonen, wieder im Schwachlicht.

Die geernteten Wasserlinsen lassen sich extrem leicht trocknen, über bspw. einen Warmlufttrockner mit einem Fließ. Da Wasserlinsen im adulten Zustand daueroffene Stomata aufweisen, trocknen die Wasserlinsen extrem schnell durch, sogar wenn die Trocknung im luftfeuchten Gewächshaus über einem Warmluftstrom von lediglich 40°C durchgeführt wird. Die Trocknungszeit liegt dann bei nur 1 bis 1,5 Stunden.

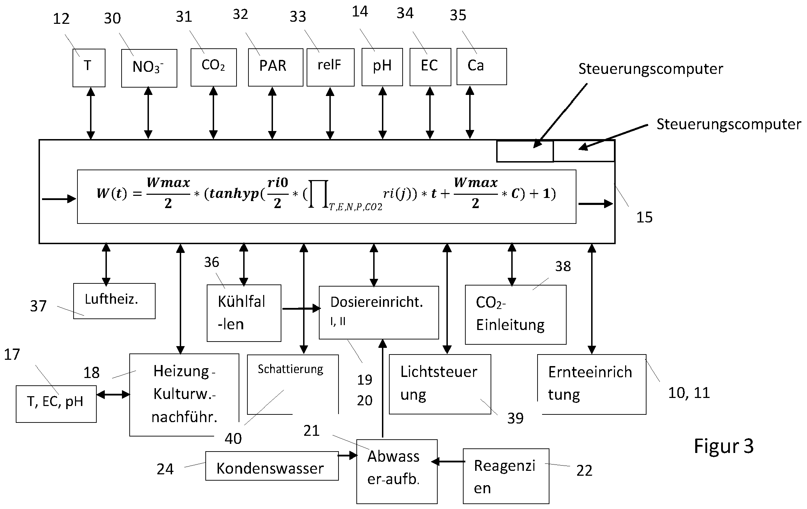

Figur 3 zeigt die Steuerung 15 und Steuerungslogik der Anlage 1.

Die an den jeweiligen Kulturwannen 2 direkt mit dem Kulturwasser verbundenen Sensoren für Temperatur 12, für Leitfähigkeit 13 und für pH Wert 14 werden als Sensorwerte in die Steuerung 15 eingelesen, um den Status der Nährlösungen überwachen zu können.

Ebenso gesteuert bzw. rückmeldend gesteuert ist der Erntesammler 11. Weiterhin kann an jeder Wanne 2 ein Photosensor zur Messung der PAR Lichtintensität vorgesehen sein. PAR bezeichnet die für die Photosynthese relevanten Wellenlängen.

Stichproben aus dem Erntesammler 11 können auch automatisch entnommen werden, um einen Stickstoff- und damit Proteinschnelltest vorzunehmen. Dieser erfolgt über eine Bestimmung des gebundenen Stickstoffs in der Biomasse. Der Rohproteingehalt ergibt sich aus einer Umrechnung um dem Faktor 6,25. Ferner steuert die Steuereinrichtung demzufolge die Zusatzbeleuchtung 5 in Lichtqualität (Wellenlänge) und Lichtquantität.

Die direkte Kulturwannenheizung erfolgt durch eine durch die Kulturwanne 2 durchgeführte Warmwasserleitung 4. Auch diese wird temperaturgeführt angesteuert.

Weiterhin steuert die Steuereinrichtung 15 aus der Gesamtheit der Daten auch die Abwasseraufbereitung die zumindest als Stickstoff-, Phosphor und Kaliumquelle eingesetzt wird.

Dabei wird die im Gewächshaus und im System 1 abgetropfte Kondenswassermenge gesammelt und rückgeführt durch eine ansteuerbare Kondenswasser-Rückführung 24.

Diese kommt gleich zweimal zum Einsatz. Erstens bei der Bereitstellung einer Nullwassermenge zur Anmischung mit dem Abwasser, über die Abwasseraufbereitung 21, und zweitens zur finalen Einstellung einer austarierten Nährlösung durch Zugabe einer Nullwassermenge, was in diesem Zusammenhang als Wasserhebel bezeichnet werden soll, der das finale Konzentrationsverhältnis in der Nährlösung einstellt.

Die Abwasserzuführung, bspw. Gülle, Gärreste etc., wird angesteuert über die Steuerung 15. Ferner wird die Zugabe von Reagenzien 22 zum Fällen und/oder Hygienisieren der Abwässer 23 in der Abwasseraufbereitung 21 angesteuert.

Schlussendlich wird ein Dosiermeter 19 zur gesteuerten Zugabe von Spurenelementen ansteuert, und über ein Dosiermeter 20 erfolgt ein Zuführung der Nährlösung aus der Abwasserbehandlung betreffend Stickstoff, Phosphor und Kalium.

Beide Stoffströme aus den beiden Dosimetern werden einem Mischer zugeführt, der die finale Nährlösung für die aquatischen Kulturwannen erstellt, und dies über Temperatur und/oder Leitfähigkeit, und/oder pH-Wert final kontrolliert. Der Mischer wird so auch über die Steuerung 15 angesteuert und das Kulturwasser so zu den Kulturwannen gepumpt.

Die zugeführte Menge soll in der Regel die verdunstete Kulturwassermenge ersetzen.

Optimal ist eine tägliche Nachführung der Nährlösung.

Diese kann entweder durch in den Wannen verlegte Leitungen, oder durch die Warmwasserleitung mit Diffusionsöffnungen verteilt werden. Eine weitere vorteilhafte Möglichkeit liegt darin, die aquatischen Kulturen, hier Wasserlinsen, von oben mit Nährlösung zu besprühen, über die entlang der Wannen 2 angeordneten Nährlösungssprüher 6.

Es ist außerdem vorteilhaft, wenn die Nährlösung so eingestellt ist, dass die in der Verdunstungsmenge, enthaltenen Nährstoffe der mittleren Nährstoffaufnahme im selben Zeitraum entspricht. So wird vermieden, dass es zu einer Nährstoffkumulation in den Kulturwannen 2 kommt.

Wenn dies über die Leitfähigkeit und pH-Wert geführt wird, kann dies auf einfache Weise bewerkstelligt werden.

Die Steuerung der Lichtanlage 5 kann über einen in der Steuerung 15 abgelegten Algorithmus mit der Nährstoffzuführung, insbesondere des Stickstoffes so gekoppelt sein, dass die in der jeweiligen Zone der Wanne 2 lokale Gabe an Stickstoff und weiteren Makro-, Oligo- und Mikronährstoffen auf den erzielten Energiewert der Ausleuchtung adaptiert ist.

Hierzu können Lichtsensoren im sogenannten PAR-Bereich vorgesehen sein, die die effektive Ausleuchtung messen.

Des Weiteren gibt Figur 3 nochmals alle verfahrensgemäßen Berücksichtigungen der Steuerung, Sensorik, und Einzelelemente der erfindungsgemäßen Kulturanlage im Überblick an. Die Steuerung 15 der Kulturanlage 1 umfasst einen oder mehrere Steuerungscomputer. Mehrere Steuerungscomputer und auch mehrere Ernteeinrichtungen 11, 12 können dann notwendig sein, wenn das Gewächshaus in jeweils autarke gegeneinander abgeschottete Kompartments eingeteilt ist, in denen sich die jeweiligen Kulturbedingungen voneinander unterscheiden, um bspw. unterschiedliche Biomassenqualitäten und/oder unterschiedliche Pflanzengattungen herzustellen.

Über die Steuerung 15 wird die Luftheizung 37, sowie die Dosiereinrichtungen 19 und 20 für die Düngelösungen, die $CO_2$-Einleitung 38, sowie die Ernteeinrichtung gesteuert, was in der oben beschriebenen Weise und dem angegebenen Algorithmus erfolgt. Die Kulturwassernachführung 18 (auch Kulturwassermischer) enthält ebenfalls Sensoren zur Erfassung der Temperatur, der Leitfähigkeit und des pH-Wertes des nachgeführten Kulturwassers, um diese an die verfahrensführenden Maßnahmen der Modellierung anzugleichen. Sensor(en) 30 zur Bestimmung der Nitratkonzentration ist (sind) im Kulturwasser der Kulturwannen 2 angeordnet. $CO_2$- Sensor(en) 31 zur Ermittlung der $CO_2$-Konzentrationen wird (werden) ebenfalls im Bereich der Kulturwanne(n) 2 platziert, ebenfalls wie Sensor(en) 32 zur Messung der photonischen Energie im PAR-Bereich. Ferner wird die relative Luftfeuchte über entsprechende(n) Sensor(en) 33 ermittelt.

Der pH-Wert im Kulturwasser (Nährlösung) wird ebenfalls über Sensor(en) 14 ermittelt, ebenso die elektrische Leitfähigkeit über entsprechende Sensor(en) 34 ermittelt. Schlussendlich wird (werden) vorzugsweise auch Kamera(s) eingesetzt, die auf die Oberflächen der Lemnaceae-Kulturen gerichtet sein können, und via Mustererkennung den Wachstumszustand der Kultur ermittelbar machen.

Sämtliche Sensorwerte werden der Steuerung 15 in Echtzeit zugeführt, und in der oben beschriebenen Weise im Algorithmus verwendet, wobei die Werte für relative Luftfeuchte und die pH-Werte als Bewertungsgrößen für den biologischen Zustand der Kulturen mit herangezogen werden. Die Leitfähigkeit sollte erfahrungsgemäß bei mindestens 500 - 2.200 µSiemens liegen, und der pH-Wert zwischen 5,8 und 7,5. Über die Steuerung erfolgt dann die Steuerung der Luftheizung 37, der Kühlfallen 36, der Dosiereinrichtungen 19 und 20, die $CO_2$-Einleitung, sowie die Beheizung der Kulturwassernachführung 18, die mit den Dosiereinrichtungen 19 und 20 zur Düngereinleitung korrespondiert. Die Dosiereinrichtungen 19 und 20 verbringen den notwendigen Dünger bedarfsgerecht, wobei mit den Dosiereinrichtungen 19, 20 auch die Kulturwassernachführung 18 korrespondiert, um zielgenau den pH-Wert und die Leitfähigkeit in den gedüngten und mit Wasser austarierten Füllstand der Kulturwannen 2 einzustellen. Hierzu sind die Dosiereinrichtungen 19 und 20 gespeist von einer Abwasseraufbereitung 21, und/oder von der Rückführung des Kondenswassers 24 aus den Kühlfallen 36, denen sodann die einzelnen Düngerbestandteile (Reagenzien) 22 zugeführt werden. Die Lichtsteuerung 39 regelt die gewünschten Ausleuchtungswerte der mit LED beleuchteten Maturationszonen.

Schlussendlich werden über die Steuerungscomputer der Steuerung 15, die resultierenden optimalen Ernteintervalle (Erntezyklen) sowie die optimale Erntemenge (Ernteamplituden) ermittelt, und sodann die entsprechenden Erntemengen aus der Maturationszone durch entsprechende Ansteuerung der Ernteeinrichtungen 10, 11 abgeskimmt. Die verbleibende Kultur in der Kulturwanne 2 entspannt sich in der Kulturdichte, sodass möglichst symmetrisch um den Punkt des maximalen Gradienten der sigmoidalen Wachstumskurve wieder ein optimaler Nachwuchs der Kultur entsteht, der bei der nächsten Ernte wieder abgeskimmt wird (usw.).

Über die Schattierung 40 können bspw. im Sommer zu hohe Globalstrahlungsanteile über den Kulturwannen bzw. Kulturwannenregalen abgeschirmt werden. Entsprechende kritische Werte, die eine Schattierung ansteuern kommen aus der Messung der Temperatur (Überhitzungsgefahr in der oberen Kulturwanne 2 im Regal) und/oder über die Lichtsensoren, bei zu hoher Globalstrahlungseinwirkung.

Eine weitere Funktion kommt der Betätigung der Schattierung 40 auch zu, wenn bspw. bei sehr starker Nachtabkühlung außerhalb des Gewächshauses ein zu starker Wärmeverlust nach oben in der Nacht durch ein Schließen der Schattierung 40 vermieden werden soll.

Alternative Ausgestaltungen:

Alternativ zur Kultivierung der aquatischen Pflanzen in einem gestapelten Kulturwannensystem ist auch die Kultivierung in einer Monolage, also einer Ebene von Kulturwannen 2 möglich oder in einem $CO_2$ begasten Folientunnel.

Eine weitere Alternative besteht darin, das Verfahren auch in einem geschlossenen Raum, auch ohne Zumischung von Globalstrahlung, sondern unter ausschließlichem Einsatz von Kunstlicht durchzuführen.

Weiterhin kann die LED-Lichtanlage 5 auch im gepulsten Ansteuerungsmodus betrieben werden. Da LEDs als rein elektronische Halbleiterbauelemente vorliegen, kann durch eine getaktete Beaufschlagung mit elektrischer Energie, in den Licht-Pause-Zeiten elektrische Energie eingespart werden.

Eine weitere Ergänzung des Betriebsverfahrens ist es, die im eingangs genannten Stand der Technik bereits erwähnte Vorkultur mit zu integrieren.

Dies bedeutet, dass das aufbereitete Nährwasser zur Abreicherung der Nährstoffe und vor allen zur Hyperakkumulation von Schwermetallen, vor der Zugabe von Spurenelementen durch Dosimeter 1, durch eine aquatische Vorkultur mit Hyperakkumulatoren geleitet wird, wie bspw. Eichhornia crassipes und/oder Pistia stratiotis, und/oder Nasturtium officinales (Brunnenkresse) und/oder Alligator weed und/oder Comfrey, hindurchgeleitet wird, u.U. alle aquatischen oder Sumpfpflanzen, oder durch hydroponische Kulturen aller Art, bevor das Abwasser den Lemnaceae Kulturen zugeführt wird.

Auf diese Weise können auch weitere Schadstoffe, sowie Schwermetalle oder noch zu hoch konzentrierte Nährwässer von der Vorkultur abgereichert werden, vor allem bei den schwer zu reinigenden kleinen Konzentrationen biogen so abgefiltert werden.

Die Lemnaceae sind nach dem vorstehend in Gänze genannten Verfahren HACCP zugelassen, und in der Positivliste für Einzelfuttermittel der DLG (Stand April 2017) aufgenommen worden. Angestrebt und vorteilhaft ist des Weiteren die Verwendung der so produzierten Lemnaceae (Wasserlinse) im Bereich der menschlichen Ernährung als bspw. Novelfood.

Mit Blick auf den hohen Proteingehalt von bis zu 40% und mehr, eignet sie sich aufgrund Ihres hochwertigen Aminosäurespektrum auch für die Herstellung von Highend-Protein-Isolaten.

Insbesondere ist das System 1 aber auch im Fish-Farming einzusetzen, bei dem die Fischgülle als Abwasser in der vorstehend genannten Weise aufbereitet, und als Nährlösung der Lemnaceae zugeführt wird, die am Ende wiederum nach Hygienisierung als hochwertiges Fischfutter eingesetzt wird.

Auch hierbei ist der besagte Kaskadennutzen vollziehbar.

Des Weiteren ist es möglich, die pflanzlichen Proteine der Wasserlinse durch Verfütterung an Insekten in tierische Proteine zu konvertieren.

Bei längserstreckten Kulturwannen 2 können die besagten Zonen auch als eine Art Wassertreppe ausgestaltet sein.

Das heißt, dass die Teilkulturen in den Zonen wie ein Schieberegister nach entsprechender Verweilzeit die Wasserlinsen von einer Zone in die nächste Zone spülen. Damit dies auch koordiniert ablaufen kann, muss natürlich zuerst die letzte, finale Erntezone 3 erst durch Beerntung entleert werden, bevor die anderen Zonen nachgeführt werden.

Die Zonen 1 und 2 dürfen dabei nie vollständig entleert sein, sondern es muss die Impfbiomasse für den nächsten Zyklus verbleiben.

So wird nun zumindest der vorhergehenden Zone so viel Kulturwasser nachgeführt, dass die Kulturen in die Folgezone über die jeweilige Skimmerkante überspült werden. Die Skimmerkanten zwischen Zone 1 und Zone 2 liegen dabei höher als zwischen der Zone 2 und Zone 3, so dass es nicht zu einem Rückfluss kommt, denn es soll schrittweise von Zone 1 in Zone 2 und dann in Zone 3 überspült werden. Wasserlinsen lassen sich über Skimmerkanten hinweg außerordentlich gut überspülen, weil sie enorm fließfähig sind. Am Ende der Zone 3 findet dann die finale Ernte statt.

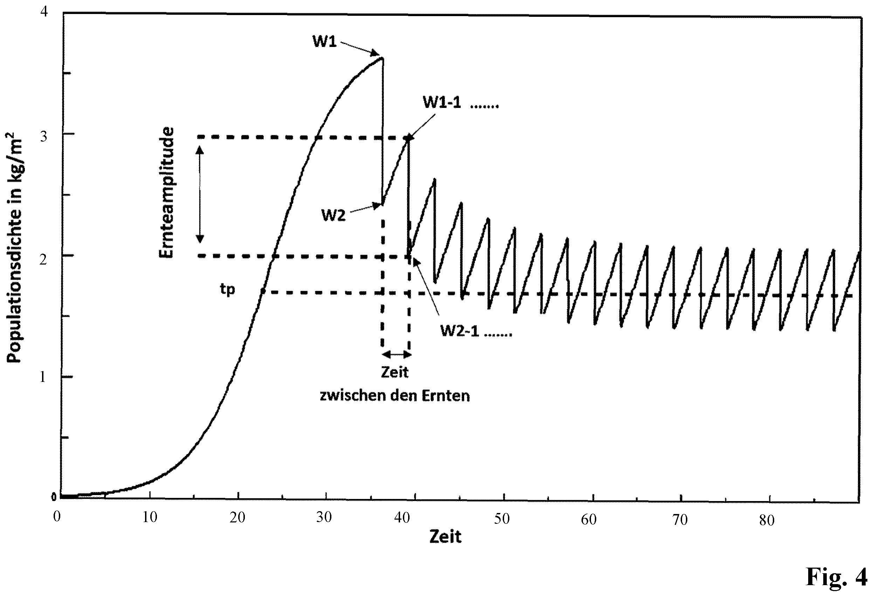

Figur 4 zeigt die Wachstumssigmoide, die auf Basis der oben genannten, zuvor ermittelten pflanzenspezifischen Parameter modelliert bzw. errechnet und für die Kulturanalge erhalten wird. Die Wachstumssigmoide stellt die Populationsdichte der Kulturpflanze in Abhängigkeit der Zeit (in Tagen) dar. In der Praxis erreicht die modellierte Wachstumssigmoide eine Annäherungsgenauigkeit an die reale Wachstumssigmoide der aquatischen Kultur in der aquatischen Kultureinrichtung von 99,4 %. Dabei wird vorausgesetzt, dass die Steuerparameter, die in der Modellierung eingesetzt werden, auch in Realität mit einer entsprechend akkuraten Genauigkeit im Steuerziel erreicht wurden. Wird bspw. eine Abweichung festgestellt, dann werden entweder die Steuerziele der Steuerparameter für die Kulturparameter Temperatur und Licht und $CO_2$ und Ernährung (Düngung) wie oben beschrieben adaptiv nachgeregelt, oder es wird eine neue Modellierung ausgelöst, die diese Abweichung berücksichtigt und daraus neue optimale Erntezeitpunkte und neue optimale Ernteamplituden errechnet und in der Steuerung der Kultureinrichtung entsprechend aktualisiert. Die Wachstumssigmoide zeigt ein Anwachsen der aquatischen Kultur vom Start (Impfung) der Kultur auf jeder Kulturwanne 2 bis zum Erreichen einer Populationsdichte die deutlich (ca. 30%) über der halben Grenzdichte tp liegt. Dort befindet sich der Erntestartpunkt W1. Die dabei entnommene Menge reduziert die Populationsdichte auf den Punkt W2. Die Differenz aus W1-W2 entspricht der Erntemenge oder Ernteamplitude. Diese wird vorzugsweise auf die Menge beschränkt, die beispielsweise 1/3 der Fläche der beleuchteten Zone 3 (siehe beispielsweise Fig. 1 und Figur 2) entspricht. Sie kann aber auch der gesamten Länge der Fläche der Zone 3 entsprechen. Die Modellierung wird so bei einer Änderung den nächstmöglichen optimalen Erntezeitpunkt ermitteln.

Nach der Ernte beziehungsweise der Teilernte wächst die Kultur von der durch die Beerntung dezimierten Population der Populationsdichte W2 wieder mit denselben Wachstumsparametern der ursprünglichen Wachstumssigmoide an, bis sie einen weiteren Punkt W1-1 erreicht usw. Was hierbei noch sichtbar ist, ist der Effekt, dass wenn der Punkt W1 sehr hoch in der Populationsdichte angefahren wird, die durch die wiederholten Ernten sich bildende Sägezahnkurve eine Relaxation nach unten erfährt, und zwar so lange, bis sich die Sägezahnkurve symmetrisch um den Punkt tp der Wachstumssigmoide anschmiegt. Dies ist der Punkt des maximalen Wachstumsgradienten der Wachstumssigmoide der aquatischen Kultur. Dabei nimmt bei immer gleicher Fläche der partiellen Beerntung die entnommene Erntemenge leicht ab (man sieht die Ernteamplituden werden etwas kleiner mit jeder Folgeernte), solange bis Erntemenge (=Ernteamplitude), Erntezeitpunkte, im Nachwuchs-Gleichgewicht der Population der aquatischen Kultur steht. Danach verlaufen Ernteamplituden und Erntezeitpunkte gleich. Die Erfindung zeigt hier am deutlichsten die Umsetzung populationsdynamischer Modellierungen, um am Ende damit maximale Ernteerträge zu erzielen. Wichtig ist dabei die konsequente technische Einbindung der Steuerung der aquatischen Kultureinrichtung, wie oben beschrieben.

**Bezugszeichen**

| | |
|---|---|
| 1 | Kulturwannen-Etagensystem |
| 2 | Kulturwanne |
| 3 | Pfeiler |
| 4 | Schlauchsystem, Heizung |
| 5 | Hilfsausleuchtung, Lichtanlage LED, Zusatzbeleuchtung, ggfs. längsverschieblich entlang der Zonen |
| 6 | Nährlösungssprüher |
| Zone 1 | Kulturwannenabschnitt |
| Zone 2 | Kulturwannenabschnitt |
| Zone 3 | Kulturwannenabschnitt |
| 10 | Skimmer, Ernteskimmer |
| 11 | Erntesammler |
| 12 | Temperatursensor an Kulturwannen |
| 13 | Leitfähigkeitssensor an Kulturwannen |
| 14 | pH-Sensor an Kulturwannen |
| 15 | Steuerung |
| 16 | Temperatursteuerung |
| 17 | Sensoreinheit (T, Lf, pH) an Kulturwassermischer |

| | |
|---|---|
| 18 | Kulturwassernachführung, Kulturwassermischer |
| 19 | Dosiereinrichtung I, NPK, Spurenelemente, Oligonährstoffe |
| 20 | Dosiereinrichtung II |
| 21 | Abwasseraufbereitung |
| 22 | Düngerbestandteile, Reagenzien |
| 23 | Abwässer, Nährwässer |
| 24 | Kondenswasser-Rückführung |
| 30 | Nitratsensor (NO3-) |
| 31 | $CO_2$ Sensor |
| 32 | Lichtsensor, sensitiv auf photosyntheserelevante Strahlung PAR |
| 33 | relative Feuchte Sensor |
| 34 | Leitfähigkeitssensor EC |
| 35 | Kamera |
| 36 | Kühlfallen |
| 37 | Luftheizung |
| 38 | $CO_2$-Einleitung |
| 39 | Lichtsteuerung |
| 40 | Schattierung |
| W1 | Populationsdichte bei Start der ersten partiellen Ernte |
| W2 | Populationsdichte nach der ersten partiellen Ernte |
| W1-1 | Populationsdichte bei Start der zweiten Ernte |
| W1-2 | Populationsdichte nach der zweiten Ernte |

**Patentansprüche**

1. Verfahren zum Betrieb einer Kulturanlage für Lemnaceae, wobei die Lemnaceae in einem gestapelten Kulturwannensystem (1) mit aquatischer Produktionsfläche kultiviert werden, wobei die Lemnaceae durch eine zyklische und partielle Beerntung der aquatischen Produktionsfläche entnommen werden, wobei die Lemnaceae auf der aquatischen Produktionsfläche bis zur Folgeernte wieder nachwachsen,

   - wobei die Kultur durch Impfung mit Lemnaceae zunächst entlang einer sigmoidalen Wachstumskurve (W) auf einen Bedeckungsstatus von mehr als 50% der zuvor ermittelten sorten- und lichtabhängigen maximal möglichen Bedeckung (Wmax) populiert wird,
   - wobei nach dem Populieren auf mehr als 50% der maximal möglichen Bedeckung (Wmax) in zyklisch wiederkehrenden Zeitabständen (Δt), die als Erntezykluszeiten benannt werden, eine Menge von 5%-70% der jeweiligen Bedeckung geerntet wird,
   - wobei die Erntezykluszeiten und die Ernteamplituden die ursprüngliche sigmoidale Wachstumskurve zu einer Sägezahnkurve umbilden, **dadurch gekennzeichnet,**

   **dass** die Erntezykluszeiten über eine Modellierung des Wachstumsprozesses eine Temperatur, eine Kohlenstoffdioxid-Konzentration, eine Ernährung und/oder ein den Lemnaceae zugeführtes Licht als Kulturparameter vorbestimmend optimiert und in eine Steuerung (15) einer Ernteeinrichtung (10, 11) oder eines Ernteverfahrens als jeweilige Steuergröße für eine Ermittlung eines optimalen Zeitpunkts zur Auslösung einer Ernte eingespeist werden, wobei bei einer Änderung eines oder mehrerer dieser Kulturparameter innerhalb der Kulturanlage, der jeweilige Zeitpunkt der Ernte und/oder eine jeweilige Ernteamplitude automatisch nachgesteuert werden, indem bei Feststellung der Änderung eines oder mehrerer dieser Kulturparameter entweder die Steuerziele der Steuergröße für die Kulturparameter Temperatur und Kohlenstoffdioxid-Konzentration und Ernährung und ein den Lemnaceae zugeführtes Licht adaptiv nachgeregelt oder eine neue Modellierung des Wachstumsprozesses ausgelöst wird, die diese Änderung des oder der Kulturparameter berücksichtigt und daraus einen neuen optimalen Zeitpunkt zur Auslösung der Ernte errechnet und in der Steuerung (15) der Ernteeinrichtung (10, 11) aktualisiert.

2. Verfahren nach Anspruch 1,
   **dadurch gekennzeichnet,**
   **dass** die sigmoidale Wachstumskurve, die gattungs- und sortenabhängig ist, vor dem Betreiben der Kulturanlage für die verwendeten Gattungen, insbesondere Arten der Lemnaceae ermittelt wird und in einem adaptiven Datenfeld in der Steuerung (15) abgelegt wird, wobei aus diesem Datenfeld die sigmoidale Wachstumskurve modelliert wird, wobei die Erntezykluszeiten oder der Bedeckungsstatus einem vorbestimmten Sägezahnkurvenverlauf entsprechen, wobei aus der Modellierung Werte für die Erntezeitpunkte entlang der oberen Spitzenwerte des Sägezahnkurvenverlaufs in-situ automatisch angepasst werden, wobei die angepassten Werte der Steuerung (15) der Ernteeinrichtung (10, 11) zugeleitet werden.

3. Verfahren nach Anspruch 1 oder 2,
   **dadurch gekennzeichnet,**
   **dass** wenn als Steuergröße die Temperatur und/oder das Licht und/oder die Kohlenstoffdioxid-Konzentration in der Kulturanlage über ein vorgebbares und einstellbares Zeitintervall unter einen entsprechend einstellbaren Schwellwert fällt oder über einen entsprechend einstellbaren Schwellwert steigt, auf Basis dieser sich ändernden Steuergröße ein optimaler Erntezeitpunkt automatisch neu ermittelt wird und bevorzugt die Erntezykluszeiten und/oder die Ernteamplitude automatisch angepasst wird.

4. Verfahren nach einem der Ansprüche 1 bis 3,
   **dadurch gekennzeichnet,**
   **dass** die sigmoidale Wachstumskurve auf Basis einer Wachstumsgleichung für limitiertes Wachstum generiert wird, wobei in der Wachstumsgleichung ein Wachstumsfaktor im Exponenten einer natürlichen Exponentialfunktion als Produkt aus jeweils einem lichtabhängigen, einem temperaturabhängigen, einem Kohlenstoffdioxid-Konzentration-abhängigen und einem nährstoffabhängigen Koeffizienten gebildet wird, multipliziert mit einer Basis-Wachstumsrate, wobei das Ergebnis aus dieser Wachstumsgleichung sodann in die Steuerung (15) der bei jeder Ernte entnommenen Ernteamplitude abgelegt wird, wobei auf Basis dieses abgelegten Ergebnisses die jeweils optimalen Zeitpunkte zur Auslösung der Ernte über eine Steuerungsgleichung der Steuerung (15) ermittelt werden.

5. Verfahren nach einem der vorhergehenden Ansprüche,
   **dadurch gekennzeichnet,**
   **dass** eine in-situ-Erfassung von Inhaltstoffen einer durch die zyklische und partielle Beerntung der aquatischen Produktionsfläche geernteten Biomasse eine Ermittlung von akkumulierten Schwermetallen und akkumuliertem Calciumoxalat ermöglicht, um diese Schwermetall- und Calciumoxalat-Konzentrationswerte in einer zu erntenden Biomasse zu minimieren, woraufhin die Erntezykluszeiten über die Modellierung so eingestellt werden, dass sich zeitlich stabile kurze Erntezyklen von 0,5 bis 5 Tagen ergeben.

6. Verfahren nach einem der vorhergehenden Ansprüche,
   **dadurch gekennzeichnet,**

   **dass** die Erntezykluszeiten und damit Verweilzeiten der Lemnaceae auf der aquatischen Produktionsfläche optimal verkürzt werden, sodass bei gleichzeitig hohem Proteingehalt einer zu erntenden Biomasse eine Akkumulationszeit für Schwermetalle und
   Calciumoxalat deutlich verringert wird.

7. Verfahren nach einem der Ansprüche 1 bis 6,
   **dadurch gekennzeichnet,**
   **dass** eine im Verfahren in die Kultureinrichtung nachgeführte Nährlösung genauso austariert ist, dass eine nachgeführte Nährstoffmenge in allen Makro, Oligo- und Mikronährstoffen so eingestellt ist, dass sie entlang der Erntezykluszeiten genau der jeweiligen Zehrung im Kultursystem entspricht, bevorzugt unter der weiteren kumulativen Bedingung, dass gleichzeitig das Nährstoffniveau, insbesondere bei Stickstoff, bevorzugt bei maximal 1 mMol/l Kulturflüssigkeit liegt.

8. Verfahren nach Anspruch 7,
   **dadurch gekennzeichnet,**

   **dass** die von dem eingestellten Stickstofflevel sodann übrigen Makroelemente Phosphor, Kalium sowie die des Oligoelementes Magnesium im molaren Verhältnis eingestellt werden, und zwar

$$3/1 \leq N/P \leq 10/1$$

$$2/1 \leq N/K \leq 4/1$$

$$10/1 \geq N/Mg \geq 5/1$$

mit N für Stickstoff, P für Phosphor, K für Kalium und Mg für Magnesium.

9. Verfahren nach Anspruch 8,
**dadurch gekennzeichnet,**
**dass** zur Unterdrückung einer unerwünschten Algen-Co-Population, das molare Verhältnis von NH4+/NO3- von 1/9 eingestellt wird und eine Gesamtstickstoffkonzentration auf einen Zielwert von 1,0 +- 0,2 mMol/l eingestellt wird.

10. Verfahren nach Anspruch 8 oder 9,
**dadurch gekennzeichnet,**
**dass** abweichend vom in Anspruch 9 genannten Zielwert des molaren Verhältnisses von NH4+/NO3- von 1/9 temporär über einen oder mehrere Tagen hinweg auf 2/8 umgesteuert wird, bei gleicher Gesamtstickstoffkonzentration, sobald eine in-situ Analyse einen Anstieg der Calciumoxalat-Konzentration in der geernteten Biomasse zeigt, und/oder die Calciumoxalat-Konzentration in der zu erntenden Biomasse abgesenkt werden soll.

11. Verfahren nach Anspruch 10
**dadurch gekennzeichnet,**
**dass** diese Umsteuerung des molaren Verhältnisses von NH4+/NO3- von 1/9 auf 2/8 alternierend vorgenommen wird.

12. Verfahren nach einem der Ansprüche 8 bis 11,
**dadurch gekennzeichnet,**
**dass** die Einstellung dieser Nährstoffverhältnisse eine unerwünschte Algen-Co-Population unterdrückt, und dies mittels automatischer und adaptiver Bilderkennung von Kamerabildern mindestens einer repräsentativen Kulturoberfläche in-situ beobachtet wird.

13. Verfahren nach einem der vorhergehenden Ansprüche,
**dadurch gekennzeichnet,**
**dass** der Proteingehalt in der Kultur eingestellt wird, indem Stichproben genommen, und hernach als Koeffizienten einer Steuerungsgleichung in der Steuerung (15) angepasst werden.

14. Verfahren nach einem der vorhergehenden Ansprüche,
**dadurch gekennzeichnet,**
**dass** die Kulturwannen (2) jeweils längserstreckte Wannen sind, bei welchen Beerntungszonen jeweils an mindestens einem Ende der Kulturwannen (2) angeordnet sind, und dass sich ein, in Lichtqualität und Lichtquantität steueroder regelbare, zugeführtes Licht der Kulturwannen (2) auf diese Beerntungszonen oder in die Mitte der Länge der Kulturwannen (2) gerichtet sind.

15. Verfahren nach Anspruch 14,
**dadurch gekennzeichnet,**
**dass** eine Lichtzufuhr in einer der Beerntungszonen derart eingesetzt wird, dass die Lichtzufuhr in dieser Zone sowohl in der Lichtquantität als auch in der Lichtqualität an eine zu erzielende Biomassenmenge und an einen zu erzielenden Biomassen-Proteingehalt angepasst wird, indem die Lichtquantität wellenlängenselektiv geregelt wird.

16. Verfahren nach einem der v Ansprüche 14 oder 15,
**dadurch gekennzeichnet,**
**dass** eine Lichtzufuhr in einer der Beerntungszonen derart eingesetzt wird, dass die Lichtzufuhr in dieser Zone sowohl in der Lichtquantität als auch in der Lichtqualität an eine zu erzielende Biomassenmenge und an einen zu erzielenden Biomassen-Stärkegehalt angepasst wird, indem die Lichtquantität wellenlängenselektiv geregelt wird.

17. Verfahren nach einem der Ansprüche 14 bis 16,
**dadurch gekennzeichnet,**
**dass** eine Lichtzufuhr in einer Zone eingesetzt wird, die der zyklischen und partiellen Beerntungszone vorgeordnet ist, so dass die Lemnaceae zuerst durch Starklichtzonen hindurch expandieren, bevor sie vor der Beerntung nochmals in einer Schwachlichtzone zu maximaler Proteinsynthese angeregt werden, bevorzugt spezifisch geltend für bestimmte Sorten für die Proteinsynthese.

**18.** Verfahren nach einem der Ansprüche 14 bis 17,
**dadurch gekennzeichnet,**
**dass** Stellparameter von Lichtqualität und Lichtquantität zur Erzielung optimierter zielbedarfsgeregelter Protein- und/oder Stärkegehalte in einer Biomasse in einer in-situ Messung von Proben der geernteten Biomasse oder aus Stichproben von entnommener Biomasse aus einer Zone der Beerntung ermittelt werden, und hernach die Lichtqualität und Lichtquantität über die so ermittelten Stellparameter an die gewünschte Biomassenqualität angepasst und gesteuert werden.

**19.** Verfahren nach Anspruch 18,
**dadurch gekennzeichnet,**
**dass** zusätzlich zur Variation einer Gesamtlichtmenge oder einem Integral über einem gesamten Spektrum einer fotosynthetisch aktiven Strahlung (PAR) ein Energieverhältnis von Licht einer Wellenlänge von 440 nm und Licht einer Wellenlänge von 680 nm zwischen 0,2 und 1,0 eingestellt wird.

**20.** Verfahren nach einem der vorhergehenden Ansprüche,
**dadurch gekennzeichnet,**
**dass** zusätzlich zur Steuerung einer Lichtqualität und Lichtquantität, eine Ernährung der Lemnaceae durch eine Steuerung der Zugabe von Makronährstoffen Stickstoff, Phosphor und Kalium über eine Nährlösung in der Art erfolgt, dass die Konzentrationen der zugegebenen Makronährstoffe an die Lichtqualität und/oder die Lichtquantität solange angepasst wird, bis die jeweils erwünschten optimierten Protein- und/oder Stärkewerte der geernteten Biomasse oder der zu erntenden Biomasse erzielt werden.

**21.** Verfahren nach einem der vorhergehenden Ansprüche,
**dadurch gekennzeichnet,**
**dass** zusätzlich ein Verhältnis von in eine Nährlösung zugegebenem Ammonium-Stickstoff zu zugegebenem Nitrat-Stickstoff angepasst wird, derart, dass der Nitrat-Stickstoffanteil gegenüber dem Ammonium-Stickstoffanteil überwiegt, und dass ein Phosphor/Stickstoff-Verhältnis zwischen 1/20 und 1/5 respektive zur eingesetzten aquatischen Pflanzensorte eingestellt wird.

**22.** Verfahren nach einem der vorhergehenden Ansprüche,
**dadurch gekennzeichnet,**
**dass** zusätzlich eine Zugabe eines Oligo-Nährstoffes Magnesium und/oder eine Zugabe von Sulfaten angepasst wird.

**23.** Verfahren nach einem der vorhergehenden Ansprüche,
**dadurch gekennzeichnet,**
**dass** eine zusätzliche Zugabe von Kohlenstoffdioxid in einen Gasraum der Kulturanlage bis zu einem Konzentrationswert von $\leq$ 5.000 ppm erfolgt und geregelt wird.

**24.** Verfahren nach einem der vorhergehenden Ansprüche,
**dadurch gekennzeichnet,**
**dass** alternativ oder zusätzlich zu einer Gabe von Kohlenstoffdioxid, Kohlensäure über die Nährlösungszufuhr entgasend oder direkt ins Kulturwasser zugegeben wird.

**25.** Verfahren nach einem der vorhergehenden Ansprüche,
**dadurch gekennzeichnet,**
**dass** eine Nährlösung und/oder ein Kulturwasser durch eine Zugabe einer wässrigen Calciumcarbonat-Lösung im pH-Wert so aufgepuffert bzw. im pH-Wert so eingestellt wird, dass ein pH-Wert im Kulturwasser zwischen 5,5 und 8,0 eingestellt wird.

**26.** Verfahren nach einem der vorhergehenden Ansprüche,
**dadurch gekennzeichnet,**
**dass** als Kulturpflanzen Lemnaceae der Art Spirodela polyrhiza und/oder Landoltia punctata, und/oder Lemna minor L., und/oder Lemna gibba, und/oder Wolffiella hyalina, und/oder Wolffia microscopica, und/oder Hybriden aus mindestens zwei Arten eingesetzt werden.

**27.** Automatisch gesteuerte Kulturanlage für Lemnaceae, wobei die Lemnaceae in einem gestapelten Kulturwannensystem (1) mit aquatischer Produktionsfläche kultiviert werden,

- wobei die Lemnaceae durch eine zyklische und partielle Beerntung der aquatischen Produktionsfläche entnommen werden, wobei die Lemnaceae auf der aquatischen Produktionsfläche bis zur Folgeernte wieder nachwachsen

- wobei die Kultur durch Impfung mit Lemnaceae zunächst entlang einer sigmoidalen Wachstumskurve auf einen Bedeckungsstatus (W1) von mehr als 50% der zuvor ermittelten sorten- und lichtabhängigen maximal mögliche Bedeckung (Wmax) populierbar ist,

- wobei nach dem Populieren auf mehr als 50% der maximal mögliche Bedeckung (Wmax) in zyklisch wiederkehrenden Zeitabständen die als Erntezykluszeiten benannt werden, eine Menge von 5%-70% der jeweiligen Bedeckung über eine Erntevorrichtung (10, 11) erntbar ist,

**dadurch gekennzeichnet,**

- **dass** die Kulturwannen (2) des Kulturwannensystems (1) mit einem Nährstoffinjektionssystem (6) versehen sind, wobei das Nährstoffinjektionssystem (6) über einen Steuercomputer (15) mengenmäßig steuerbar ist,

- **dass** die Erntezykluszeiten und die Ernteamplituden die ursprüngliche sigmoidale Wachstumskurve zu einer Sägezahnkurve umbilden,

**dass** die Erntezykluszeiten über eine Modellierung des Wachstumsprozesses innerhalb eines Steuercomputers (15) eine Temperatur, eine Kohlenstoffdioxid-Konzentration, eine Ernährung und/oder ein den Lemnaceae zugeführtes Licht als Kulturparameter vorbestimmend optimierbar und in Steuerung (15) einer Ernteeinrichtung (10, 11) oder eines Ernteverfahrens als Steuergrößen für eine Ermittlung eines optimalen Zeitpunkts zur Auslösung einer Ernte einfließen, wobei bei einer Änderung eines oder mehrerer dieser Kulturparameter innerhalb der Kulturanlage, der jeweilige Zeitpunkt der Ernte und/oder eine jeweilige Ernteamplitude automatisch nachsteuerbar sind, indem bei Feststellung der Änderung eines oder mehrerer dieser Kulturparameter entweder die Steuerziele der Steuergröße für die Kulturparameter Temperatur und Kohlenstoffdioxid-Konzentration und Ernährung und ein den Lemnaceae zugeführtes Licht adaptiv nachgeregelt oder eine neue Modellierung des Wachstumsprozesses ausgelöst wird, die diese Änderung des oder der Kulturparameter berücksichtigt und daraus einen neuen optimalen Zeitpunkt zur Auslösung der Ernte errechnet und in der Steuerung (15) der Ernteeinrichtung (10, 11) aktualisiert.

28. Automatisch gesteuerte Kulturanlage nach Anspruch 27,
**dadurch gekennzeichnet,**

**dass** die sigmoidale Wachstumskurve für verwendete Gattungen, insbesondere Arten von Lemnaceae in einem adaptiven Datenfeld in der Steuerung (15) abgelegt wird,
wobei aus diesem Datenfeldmittels der Steuerung die sigmoidale Wachstumskurve modellierbar ist, wobei die Erntezykluszeiten oder der Bedeckungsstatus einem vorbestimmten Sägezahnkurvenverlauf entsprechen, wobei aus der Modellierung Werte für die Erntezeitpunkte entlang der oberen Spitzenwerte des Sägezahnkurvenverlaufs in-situ automatisch anpassbar ist, wobei die angepassten Werte der Steuerung (15) der Ernteeinrichtung (10, 11) werden.

29. Automatisch gesteuerte Kulturanlage nach Anspruch 27 oder 28,
**dadurch gekennzeichnet,**
**dass** in den Kulturwannen (2) über Sensoren (17) eine in-situ-Erfassung von Inhaltstoffen einer geernteten Biomasse eine Ermittlung von akkumulierten Schwermetallen und akkumuliertem Calciumoxalat ausführbar ist, um diese Schwermetall- und Calciumoxalat-Konzentrationswerte in einer zu erntenden Biomasse zu minimieren, und daraufhin die Erntezykluszeiten über die Modellierung so einstellbar ist, dass sich stabile kurze Erntezyklen von 0,5 bis 5 Tagen ergeben.

30. Automatisch gesteuerte Kulturanlage nach einem der Ansprüche 27 bis 29,
**dadurch gekennzeichnet,**

**dass** die Erntezykluszeiten und damit die Verweilzeiten optimal verkürzbar sind, derart,
**dass** bei gleichzeitig hohem Proteingehalt eine Akkumulationszeit für Schwermetalle und Calciumoxalat deutlich verringerbar ist.

31. Automatisch gesteuerte Kulturanlage nach einem der Ansprüche 27 bis 30,
**dadurch gekennzeichnet,**
**dass** die Kulturanlage mit einem integrierten Browser versehen ist.

32. Computerprogrammprodukt zur Steuerung einer automatischen Kulturanlage nach einem der Ansprüche 27 bis 31, die nach einem Verfahren nach einem der Ansprüche 1 bis 26 betrieben wird,
**dadurch gekennzeichnet,**
**dass** das Computerprogrammprodukt als volatiles Steuerungsprogramm ausgelegt wird, in dem die charakteristischen, auf die jeweils verwendeten Pflanzengattungen und oder - Sorten bezogene Daten der jeweiligen sigmoidalen Wachstumsparameter in einem update-Programmtool abgelegt sind.

33. Computerprogrammprodukt nach Anspruch 32,
**dadurch gekennzeichnet,**
**dass** das Computerprogrammprodukt mit dem Steuerungssystem und dem Browser der Kultureinrichtung zusammenwirkend ein Fernsteuerungs- und/oder Fernwartungswartungstool enthält.

**Claims**

1. A process for operating a culture facility for Lemnaceae, wherein the Lemnaceae are cultivated in a stacked culture tray system (1) with an aquatic production area, wherein the Lemnaceae are collected by cyclically and partially harvesting the aquatic production area, wherein the Lemnaceae grow back on the aquatic production area until the following harvest,

   - wherein the culture is populated by seeding with Lemnaceae initially along a growth sigmoid (W) to a coverage state of more than 50% above the species- and light-dependent maximum possible coverage (Wmax) ascertained beforehand,
   - wherein, after populating the culture to more than 50% of the maximum possible coverage (Wmax), an amount of 5%-70% of the respective coverage is harvested at cyclically recurring intervals of time (At), referred to as harvest cycle times,
   - wherein the harvest cycle times and the harvest amplitudes transform the original growth sigmoid to a saw tooth curve,
   **characterised in that**
   - the harvest cycle times are predeterminedly optimised via a modelling of the growth process using the culture parameters of temperature, carbon dioxide concentration, nutrition and/or light supplied to the Lemnaceae, which are fed into a controller (15) of a harvesting unit (10, 11) or a harvesting method as respective control variables for determining an optimum moment for triggering a harvest time, wherein in the event of fluctuation of one or more of said culture parameters within the culture facility the respective harvest time and/or a respective harvest amplitude are automatically readjusted by adaptively readjusting either the control targets of the control variable for the culture parameters of temperature, carbon dioxide concentration, nutrition and light supplied to the Lemnaceae when determining any fluctuation of one or more of these culture parameters, or by triggering a new modelling of the growth process which takes into account said fluctuation of the one or more culture parameters, and calculates, on this basis, a new optimum moment for triggering the harvest time, and updates said moment in the controller (15) of the harvesting unit (10, 11).

2. The process of claim 1,
   **characterised in that**
   the growth sigmoid, which is genera- and species-dependent, is determined before operating the culture facility for the genera used, particularly for species of Lemnaceae, and is recorded in the controller (15) within an adaptive data field, wherein the growth sigmoid is modelled on the basis of said data field, wherein the harvest cycle times or the coverage state correspond to a predetermined saw tooth curve, wherein, based on said modelling, values for the harvest times are automatically adjusted in-situ along the upper top values of the saw tooth curve, wherein said adjusted values are fed into the controller (15) of the harvesting unit (10, 11).

3. The process of claim 1 or 2,
   **characterised in that**
   when any one of the control variables of temperature and/or light and/or carbon dioxide concentration in the culture facility falls below a respectively predeterminable and adaptable threshold value, or rises above a respectively adaptable threshold value within a predeterminable and adaptable time interval, an optimum harvest time is automatically redetermined on the basis of said fluctuating control variable, and, preferably, the harvest cycle times and/or the harvest amplitude are automatically adjusted.

4. The process of any one of claims 1 to 3,

**characterised in that**
the growth sigmoid is generated on the basis of a growth equation for limited growth, wherein a growth factor in the exponent of a natural exponential function in the growth equation is formed as a product of one light-dependent, one temperature-dependent, one carbon dioxide concentration-dependent and one nutrient-dependent coefficient, respectively, multiplied by a basic growth rate, wherein the result of said growth equation is then recorded in the controller (15) of the harvest amplitude taken at each harvest, wherein the respective optimum times for triggering the harvest process are determined via a control equation of the controller (15) on the basis of said recorded result.

5. The process of any one of the preceding claims,
   **characterised in that**
   an in-situ detection of ingredients of a biomass harvested by cyclical and partial harvesting of the aquatic production area allows a determination of any accumulated heavy metals and any accumulated calcium oxalate to minimise said concentration values of heavy metals and calcium oxalate in a biomass to be harvested, as a result of which the harvest cycle times are adapted in the modelling such that temporally stable, short harvest cycles of 0.5 to 5 days are obtained.

6. The process of any one of the preceding claims,
   **characterised in that**
   the harvest cycle times and, along with that, the residence times of the Lemnaceae on the aquatic production area are optimally shortened such that accumulation times for heavy metals and calcium oxalate are significantly reduced while simultaneously ensuring a high protein content of a biomass to be harvested.

7. The process of any one of claims 1 to 6,
   **characterised in that**
   a nutrient solution, which is being readjusted within the culture unit, is balanced during this process such that a readjusted amount of nutrients in all macronutrients, oligonutrients and micronutrients is adapted such that it exactly corresponds to the respective consumption within the culture system along the harvest cycle times, preferably under the further cumulative condition that the level of nutrients, particularly of nitrogen, is preferably at a maximum of 1mMol/1 culture liquid at the same time.

8. The process of claim 7,
   **characterised in that,**
   based on the adapted nitrogen level, the levels of the other macroelements of phosphorus, potassium, and of the oligoelement, magnesium, are adapted to exhibit the following molar ratio:

$$3/1 \leq N/P \leq 10/1$$

$$2/1 \leq N/K \leq 4/1$$

$$10/1 \geq N/Mg \geq 5/1,$$

   wherein N represents nitrogen, P represents phosphorus, K represents potassium, and Mg represents magnesium.

9. The process of claim 8,
   **characterised in that**
   the molar ratio of $NH_4^+/NO_3^-$ is adapted to be 1/9, and a total nitrogen concentration is adapted to a target value of 1,0 +- 0,2 mMol/1 to suppress any undesired co-population of algae.

10. The process of claim 8 or 9,
    **characterised in that,**

    deviating from the target value of the molar ratio of $NH_4^+/NO_3^-$ of 1/9 indicated in claim 9,
    when an in-situ analysis shows any increase of the calcium oxalate concentration in the harvested biomass and/or when a calcium oxalate concentration in the biomass to be harvested needs to be reduced, the molar ratio is temporarily changed to be 2/8 for one or several days with the same total nitrogen concentration.

**11.** The process of claim 10,
**characterised in that**
said change of the molar ratio of $NH_4^+/NO_3^-$ from 1/9 to 2/8 is performed alternatingly.

**12.** The process of any one of claims 8 to 11,
**characterised in that**
said adaptation of these nutrient ratios suppresses any undesired co-population of algae, which is observed in-situ by means of automatic and adaptive image recognition of camera images of at least one representative culture surface.

**13.** The process of any one of the preceding claims,
**characterised in that**
the protein content in the culture is adapted by taking random samples, and is then adjusted as a coefficient in a control equation in the controller (15).

**14.** The process of any one of the preceding claims,
**characterised in that**
all culture trays (2) are elongated trays where harvest zones are arranged in at least one end of the culture trays (2), and where light, which is controllable or regulable with respect to both light quantity and light quality supplied, is directed to said harvest zones of the culture trays (2) or to the centre of the length of the culture trays (2).

**15.** The process of claim 14,
**characterised in that**
a supply of light in any of the harvest zones is employed such that the supply of light in said zone is adapted, both with regard to light quantity and light quality, to both an amount of biomass to be achieved and a protein content of the biomass to be achieved, by controlling the light quantity in a wavelength selective manner.

**16.** The process of any one of claims 14 or 15,
**characterised in that**
a supply of light in any of the harvest zones is employed such that the supply of light in said zone is adapted, both with regard to light quantity and light quality, to both an amount of biomass to be achieved and a starch content of the biomass to be achieved, by controlling the light quantity in a wavelength-selective manner.

**17.** The process of any one of claims 14 to 16,
**characterised in that**
a supply of light is employed in a zone that is arranged upstream of the cyclical and partial harvest zones such that the Lemnaceae initially expand through strong-light zones, before they are triggered, in a low-light zone, to perform maximum protein synthesis before they are harvested, which preferably applies to particular species for protein synthesis.

**18.** The process of any one of claims 14 to 17,
**characterised in that,**
for achieving an optimum protein and/or starch content in a biomass that is adapted to meet target demand, adjustment parameters of light quality and light quantity are determined by performing in-situ measurements of samples of harvested biomass, or by taking random samples of biomass collected from a harvest zone, and by subsequently adapting and controlling both the light quality and light quantity using the adjustment parameters so determined to achieve the desired quality of the biomass.

**19.** The process of claim 18,
**characterised in that,**
in addition to a variation of a total light quantity or an integral over the entire range of photosynthetically active radiation (PAR), an energy ratio of light having a wavelength of 440nm to light having a wavelength of 680nm is adapted to be between 0.2 and 1.0.

**20.** The process of any one of the preceding claims,
**characterised in that,**
in addition to controlling a light quality and a light quantity, nutrition of the Lemnaceae is performed by means of controlling the addition of the macronutrients, nitrogen, phosphorus and potassium, via a nutrient solution such that the concentrations of the added macronutrients are adapted to the light quality and/or the light quantity until achieving the desired optimised protein and/or starch values of the harvested biomass, or of the biomass to be harvested, in each case.

21. The process of any one of the preceding claims,
**characterised in that**
a ratio of ammonium-nitrogen added to a nutrient solution to nitrate-nitrogen added is additionally adapted such that the portion of nitrate-nitrogen exceeds the portion of ammonium-nitrogen, and that a ratio of phosphorus/nitrogen is adapted to be between 1/20 and 1/5 with regard to the variety of aquatic plant used.

22. The process of any one of the preceding claims,
**characterised in that,**
an addition to an oligonutrient, magnesium, and/or an addition of sulphates is additionally adapted.

23. The process of any one of the preceding claims,
**characterised in that**
additionally, a dose of carbon dioxide is added and controlled in a gas space of the culture facility up to a concentration value of < 5,000ppm.

24. The process of any one of the preceding claims,
**characterised in that**
alternatively or additionally to adding a dose of carbon dioxide, carbonic acid is added to the culture water or the nutrient solution directly or in a degassing manner.

25. The process of any one of the preceding claims,
**characterised in that**
the pH value of a nutrient solution and/or a culture water is buffered or adjusted by adding an aqueous calcium carbonate solution such that a pH value in the culture water is adapted to be between 5.5 and 8.0.

26. The process of any one of the preceding claims,
**characterised in that**
the following culture plants are employed: Lemnaceae of the species Spirodela polyrhiza and/or Landoltia punctata, and/or Lemna minor L., and/or Lemna gibba, and/or Wolffiella hyalina, and/or Wolffia microscopica, and/or hybrids of at least two varieties.

27. An automatically controlled culture facility for Lemnaceae, wherein the Lemnaceae are cultivated in a stacked culture tray system (1) with an aquatic production area,

- wherein the Lemnaceae are collected by cyclically and partially harvesting the aquatic production area, wherein the Lemnaceae grow back on the aquatic production area until the following harvest,
- wherein the culture is populated by seeding with Lemnaceae initially along a growth sigmoid to a coverage state (W) of more than 50% above the species- and light-dependent maximum possible coverage (Wmax) ascertained beforehand,
- wherein, after populating the culture to more than 50% of the maximum possible coverage (Wmax), an amount of 5%-70% of the respective coverage is harvested at cyclically recurring intervals of time (At), referred to as harvest cycle times,
**characterised in that**
- the culture trays (2) of the culture tray system (1) are provided with a nutrient injection system (6), wherein the amounts to be supplied by the nutrient injection system (6) are controllable by a control computer (15),
- the harvest cycle times and the harvest amplitudes transform the original growth sigmoid to a saw tooth curve,
- the harvest cycle times are predeterminedly optimised via a modelling of the growth process in a control computer (15), using the culture parameters of temperature, carbon dioxide concentration, nutrition and/or light supplied to the Lemnaceae, which are fed into a controller (15) of a harvesting unit (10, 11) or a harvesting method as respective control variables for determining an optimum moment for triggering a harvest time, wherein in the event of fluctuation of one or more of said culture parameters within the culture facility the respective harvest time and/or a respective harvest amplitude are automatically readjusted by adaptively readjusting either the control targets of the control variable for the culture parameters of temperature, carbon dioxide concentration, nutrition and light supplied to the Lemnaceae when determining any fluctuation of one or more of these culture parameters, or by triggering a new modelling of the growth process which takes into account said fluctuation of the one or more culture parameters, and calculates, on this basis, a new optimum moment for triggering the harvest time, and updates said moment in the controller (15) of the harvesting unit (10, 11).

**28.** The automatically controlled culture facility of claim 27,
**characterised in that**
the growth sigmoid for genera used, particularly for species of Lemnaceae, is recorded in an adaptive data field within the controller (15), wherein the control models the growth sigmoid based on said data field, wherein the harvest cycle times or the coverage state correspond to a predetermined course of the saw tooth curve, wherein values for the harvest times obtained from the modelling are automatically adaptable in-situ along the upper top values of the course of the saw tooth curve, wherein said adapted values are into the controller (15) of the harvesting unit (10, 11).

**29.** The automatically controlled culture facility of claim 27 or 28,
**characterised in that**
an in-situ detection of ingredients of a biomass harvested in the culture trays (2) and a determination of accumulated heavy metals and accumulated calcium oxalate is performed via sensors (17) to minimise said concentration values of heavy metals and calcium oxalate in a biomass to be harvested, and, subsequently, the harvest cycle times is adapted via modelling such that stable, short harvest cycles of 0.5 to 5 days are obtained.

**30.** The automatically controlled culture facility of any one of claims 27 to 29,
**characterised in that**
harvest cycle times and, therefore, residence times are optimally shortened such that an accumulation time for heavy metals and calcium oxalate is significantly reduced while simultaneously ensuring a high protein content.

**31.** The automatically controlled culture facility of any one of claims 27 to 30,
**characterised in that**
the culture facility is provided with a browser.

**32.** A computer programme product for automatically controlling a culture facility of any one of claims 27 to 31, operated according to a process of any one of claims 1 to 26,
**characterised in that**
the computer programme product is configured as a volatile control programme, wherein data, which are characteristic for respective sigmoidal growth parameters, referring to the plant genera or plant species used in each case, are recorded in an updated programme tool.

**33.** Computer programme product of claim 32,
**characterised in that**
the computer programme product contains a remote control and/or a remote maintenance tool which cooperate with the control system and the browser of the culture unit.

## Revendications

**1.** Procédé d'exploitation d'une installation de culture de Lemnaceae, dans lequel les Lemnaceae sont cultivées dans un système de bacs de culture empilés (1) avec une surface de production aquatique, les Lemnaceae étant prélevées par une récolte cyclique et partielle de la surface de production aquatique, les Lemnaceae repoussant sur la surface de production aquatique jusqu'à la récolte suivante, la culture étant d'abord populée par inoculation de Lemnaceae le long d'une courbe de croissance sigmoïde (W) jusqu'à un état de recouvrement supérieur à 50 % du recouvrement maximal possible (Wmax) déterminé auparavant en fonction de la variété et de la lumière, dans lequel, après la population à plus de 50% du recouvrement maximal possible (Wmax), une quantité de 5% à 70% du recouvrement respectif est récoltée à des intervalles de temps (Δt) se répétant de manière cyclique, qui sont appelés temps de cycle de récolte, les durées des cycles de récolte et les amplitudes de récolte transforment la courbe de croissance sigmoïde initiale en une courbe en dents de scie,
**caractérisé**
**en ce que** les temps de cycle de récolte optimisent de manière prédéterminée, par l'intermédiaire d'une modélisation du processus de croissance, une température, une concentration de dioxyde de carbone, une alimentation et/ou une lumière amenée aux Lemnaceae en tant que paramètres de culture et sont introduits dans une commande (15)

**EP 4 102 956 B1**

d'un dispositif de récolte (10, 11) ou d'un procédé de récolte en tant que grandeur de commande respective pour une détermination d'un moment optimal pour le déclenchement d'une récolte, le moment respectif de la récolte et/ou une amplitude respective de l'équipe de récolte étant réajustés automatiquement lors d'une modification d'un ou de plusieurs de ces paramètres de culture à l'intérieur de l'installation de culture, en ce que, lors de la constatation de la modification d'un ou de plusieurs de ces paramètres de culture, soit les objectifs de commande de la grandeur de commande pour les paramètres de culture température et concentration de dioxyde de carbone et nutrition et une lumière amenée aux Lemnaceae sont réajustés de manière adaptative, soit une nouvelle modélisation du processus de croissance est déclenchée, qui tient compte de cette modification du ou des paramètres de culture et calcule à partir de là un nouveau moment optimal pour le déclenchement de la récolte et l'actualise dans la commande (15) du dispositif de récolte (10, 11).

2. Procédé selon la revendication 1,
**caractérisé**
**en ce que** la courbe de croissance sigmoïde, qui dépend du genre et de la variété, est déterminée avant l'exploitation de l'installation de culture pour les genres utilisés, en particulier les espèces de Lemnaceae, et est enregistrée dans un champ de données adaptatif dans la commande (15), la courbe de croissance sigmoïde étant modélisée à partir de ce champ de données, les temps de cycle de récolte ou l'état de couverture correspondant à une courbe en dents de scie prédéterminée, des valeurs pour les moments de récolte étant adaptées automatiquement in-situ à partir de la modélisation le long des valeurs de pointe supérieures de la courbe en dents de scie, les valeurs adaptées de la commande (15) étant transmises au dispositif de récolte (10, 11).

3. Procédé selon la revendication 1 ou 2,
**caractérisé**
**en ce que** si, en tant que grandeur de commande, la température et/ou la lumière et/ou la concentration en dioxyde de carbone dans l'installation de culture tombe, pendant un intervalle de temps pouvant être prédéfini et réglé, en dessous d'une valeur seuil pouvant être réglée de manière correspondante ou augmente au-dessus d'une valeur seuil pouvant être réglée de manière correspondante, un moment optimal de récolte est redéterminé automatiquement sur la base de cette grandeur de commande changeante et, de préférence, les durées des cycles de récolte et/ou l'amplitude de l'équipe de récolte sont adaptées automatiquement.

4. Procédé selon l'une des revendications 1 à 3,
**caractérisé**
**en ce que** la courbe de croissance sigmoïde est générée sur la base d'une équation de croissance pour une croissance limitée, dans laquelle un facteur de croissance est formé dans l'exposant d'une fonction exponentielle naturelle comme produit de chacun des coefficients dépendant de la lumière, dépendant de la température, dépendant de la concentration en dioxyde de carbone et dépendant des substances nutritives, multiplié par un taux de croissance de base, le résultat de cette équation de croissance étant ensuite enregistré dans la commande (15) de l'amplitude de l'équipe de récolte prélevée à chaque récolte, les moments optimaux respectifs pour le déclenchement de la récolte étant déterminés sur la base de ce résultat enregistré par une équation de commande de la commande (15).

5. Procédé selon l'une des revendications précédentes,
**caractérisé**
**en ce qu'**une détection in situ des substances contenues dans une biomasse récoltée par la récolte cyclique et partielle de la surface de production aquatique permet de déterminer les métaux lourds accumulés et l'oxalate de calcium accumulé, afin de minimiser ces valeurs de concentration en métaux lourds et en oxalate de calcium dans une biomasse à récolter, après quoi les durées des cycles de récolte sont ajustées par la modélisation de manière à obtenir des cycles de récolte courts et stables dans le temps, de 0,5 à 5 jours.

6. Procédé selon l'une quelconque des revendications précédentes,
**caractérisé**
**en ce que** les temps de cycle de récolte et donc les temps de séjour des lemnacées sur la surface de production aquatique sont réduits de manière optimale, de sorte qu'avec une teneur en protéines élevée d'une biomasse à récolter, un temps d'accumulation des métaux lourds et de l'oxalate de calcium est nettement réduit.

7. Procédé selon l'une quelconque des revendications 1 à 6,
**caractérisé**
**en ce qu'**une solution nutritive introduite dans le dispositif de culture au cours du procédé est équilibrée de telle sorte qu'une quantité de substances nutritives introduite est ajustée dans toutes les macro, oligo- et micronutriments de telle sorte qu'elle correspond exactement à la consommation respective dans le système de culture le long des temps de cycle de récolte, de préférence avec la condition cumulative supplémentaire que, simultanément, le niveau de substances nutritives, en particulier pour l'azote, se situe de préférence au maximum à 1 mMol/l de liquide de culture.

8. Procédé selon la revendication 7,
   **caractérisé**

   **en ce que** les autres macroéléments azote, phosphore, potassium ainsi que ceux de l'oligo-élément magnésium sont ajustés dans le rapport molaire à partir du niveau d'azote ajusté, à savoir

   $$3/1 \leq N/P \leq 10/1$$

   $$2/1 \leq N/K \leq 4/1$$

   $$10/1 \geq N/Mg \geq 5/1$$

   avec N pour l'azote, P pour le phosphore, K pour le potassium et Mg pour le magnésium.

9. Procédé selon la revendication 8,
   **caractérisé**
   **en ce que**, pour supprimer une co-population d'algues indésirables, le rapport molaire de $NH_4^+/NO_3^-$ est ajusté de 1/9 et une concentration totale d'azote est ajustée à une valeur cible de 1,0 +- 0,2 mMol/l.

10. Procédé selon la revendication 8 ou 9,
    **caractérisé**
    **en ce que**, par dérogation à la valeur cible du rapport molaire NH4+/NO3- de 1/9 mentionnée dans la revendication 9, on passe temporairement à 2/8 pendant un ou plusieurs jours, tout en conservant la même concentration totale en azote, dès qu'une analyse in situ montre une augmentation de la concentration en oxalate de calcium dans la biomasse récoltée, et/ou que la concentration en oxalate de calcium dans la biomasse à récolter doit être abaissée.

11. Procédé selon la revendication 10
    **caractérisé**
    **en ce que** cette modification du rapport molaire $NH_4^+/NO_3^-$ est effectuée en alternance de 1/9 à 2/8.

12. Procédé selon l'une quelconque des revendications 8 à 11,
    **caractérisé**
    **en ce que** l'ajustement de ces conditions nutritives supprime une co-population d'algues indésirables, et en ce que cela est observé in situ au moyen d'une reconnaissance d'image automatique et adaptative d'images de caméra d'au moins une surface de culture représentative.

13. Procédé selon l'une quelconque des revendications précédentes,
    **caractérisé**
    **en ce que** la teneur en protéines dans la culture est ajustée en prélevant des échantillons et en les ajustant ensuite en tant que coefficients d'une équation de commande dans le contrôleur (15).

14. Procédé selon l'une quelconque des revendications précédentes,
    **caractérisé**
    **en ce qu'**un apport de lumière est utilisé dans une zone de la récolte cyclique et partielle de telle sorte que l'apport de lumière dans cette zone est adapté, tant en ce qui concerne la quantité de lumière que la qualité de la lumière, à une quantité de biomasse à obtenir et à une teneur en protéines de la biomasse à obtenir, en régulant la quantité de lumière de manière sélective en fonction de la longueur d'onde.

15. Procédé selon la revendication 14,

caractérisé

en ce qu'un apport de lumière est utilisé dans une zone de la récolte cyclique et partielle de telle sorte que l'apport de lumière dans cette zone est adapté, tant en ce qui concerne la quantité de lumière que la qualité de la lumière, à une quantité de biomasse à obtenir et à une teneur en amidon de la biomasse à obtenir, en régulant la quantité de lumière de manière sélective en fonction de la longueur d'onde.

16. Procédé selon l'une des revendications 14 ou 15,
caractérisé
en ce qu'un apport de lumière est utilisé dans l'une des zones de récolte de telle sorte que l'apport de lumière dans cette zone est adapté, tant en ce qui concerne la quantité de lumière que la qualité de la lumière, à une quantité de biomasse à obtenir et à une teneur en amidon de biomasse à obtenir, en régulant la quantité de lumière de manière sélective en termes de longueur d'onde.

17. Procédé selon l'une des revendications 14 à 16,
caractérisé
en ce que l'on utilise un apport de lumière dans une zone qui précède la zone de récolte cyclique et partielle, de sorte que les lemnacées se développent d'abord à travers des zones de lumière forte avant d'être stimulées avant la récolte encore une fois dans une zone de lumière faible pour une synthèse maximale de protéines, de préférence spécifiquement pour certaines variétés pour la synthèse de protéines.

18. Procédé selon l'une des revendications 14 à 17,
caractérisé
en ce que des paramètres de réglage de la qualité de la lumière et de la quantité de lumière pour l'obtention de teneurs en protéines et/ou en amidon optimisées et régulées en fonction des besoins cibles dans une biomasse sont déterminés dans une mesure in situ d'échantillons de la biomasse récoltée ou à partir d'échantillons aléatoires de biomasse prélevée dans une zone de la récolte, et en ce que la qualité de la lumière et la quantité de lumière sont ensuite adaptées et commandées en fonction de la qualité souhaitée de la biomasse par le biais des paramètres de réglage ainsi déterminés.

19. Procédé selon la revendication 18,
caractérisé
en ce que en plus de la variation d'une quantité totale de lumière ou d'une intégrale sur un spectre total d'un rayonnement photosynthétiquement actif (PAR), un rapport énergétique de la lumière d'une longueur d'onde de 440 nm et de la lumière d'une longueur d'onde de 680 nm est réglé entre 0,2 et 1,0.

20. Procédé selon l'une quelconque des revendications précédentes,
caractérisé
en ce que en plus de la commande d'une qualité de lumière et d'une quantité de lumière, une nutrition des Lemnaceae est effectuée par une commande de l'ajout de macronutriments azote, phosphore et potassium via une solution nutritive de telle sorte que les concentrations des macronutriments ajoutés sont adaptées à la qualité de lumière et/ou à la quantité de lumière jusqu'à ce que les valeurs de protéines et/ou d'amidon optimisées respectivement souhaitées de la biomasse récoltée ou de la biomasse à récolter soient obtenues.

21. Procédé selon l'une quelconque des revendications précédentes,
caractérisé
en ce que l'on adapte en outre un rapport entre l'azote ammoniacal ajouté dans une solution nutritive et l'azote nitrique ajouté, de telle sorte que la proportion d'azote nitrique prédomine sur la proportion d'azote ammoniacal, et en ce que l'on ajuste un rapport phosphore/azote compris entre 1/20 et 1/5, respectivement pour la variété de lemnacée utilisée.

22. Procédé selon l'une quelconque des revendications précédentes,
caractérisé
en ce que l'on adapte en outre une addition d'un oligo-élément nutritif, le magnésium, et/ou une addition de sulfates.

23. Procédé selon l'une quelconque des revendications précédentes,
caractérisé
en ce qu'une addition supplémentaire de dioxyde de carbone est effectuée et régulée dans un espace gazeux de l'installation de culture jusqu'à une valeur de concentration de < 5000 ppm.

24. Procédé selon l'une des revendications précédentes,
**caractérisé**
**en ce qu'**en alternative ou en plus d'une administration de dioxyde de carbone, du gaz carbonique est ajouté par dégazage via l'alimentation en solution nutritive ou directement dans l'eau de culture.

25. Procédé selon l'une quelconque des revendications précédentes,
**caractérisé**
**en ce que** le pH d'une solution nutritive et/ou d'une eau de culture est tamponné ou ajusté par l'ajout d'une solution aqueuse de carbonate de calcium de manière à obtenir un pH dans l'eau de culture compris entre 5,5 et 8,0.

26. Procédé selon l'une quelconque des revendications précédentes,
**caractérisé**
**en ce que** l'on utilise comme plantes cultivées des Lemnaceae de l'espèce Spirodela polyrhiza, et/ou Landolthia punctata, et/ou Lemna minor L., et/ou Lemna gibba, et/ou Wolffiella hyalina, et/ou Wolffia microscopica, et/ou des hybrides d'au moins deux espèces.

27. Installation de culture à commande automatique pour Lemnaceae, dans laquelle les Lemnaceae sont cultivées dans un système de bacs de culture empilés (1) avec une surface de production aquatique, les Lemnaceae étant prélevées par une récolte cyclique et partielle de la surface de production aquatique, les Lemnaceae repoussant sur la surface de production aquatique jusqu'à la récolte suivante, la culture pouvant être popularisée par inoculation de Lemnaceae tout d'abord le long d'une courbe de croissance sigmoïde jusqu'à un état de recouvrement (W1) supérieur à 50% du recouvrement maximal possible (Wmax) déterminé auparavant en fonction de la variété et de la lumière, après la population à plus de 50% du recouvrement maximal possible (Wmax), une quantité de 5% à 70% du recouvrement respectif peut être récoltée par un dispositif de récolte (10, 11) à des intervalles de temps se répétant de manière cyclique, qui sont appelés temps de cycle de récolte,
**caractérisé**
**en ce que** les bacs de culture (2) du système de bacs de culture (1) sont pourvus d'un système d'injection de substances nutritives (6), le système d'injection de substances nutritives (6) pouvant être commandé en quantité par un ordinateur de commande (15), que les temps de cycle de récolte et les amplitudes de récolte transforment le taux de croissance sigmoïde initial en une courbe en dents de scie, en ce que les temps de cycle de récolte peuvent être optimisés de manière prédéterminée par une modélisation du processus de croissance à l'intérieur d'un ordinateur de commande (15), une température, une concentration de dioxyde de carbone, une alimentation et/ou une lumière amenée aux lemnacées en tant que paramètres de culture et sont intégrés dans la commande (15) d'un dispositif de récolte (10, 11) ou d'un procédé de récolte en tant que grandeurs de commande pour une détermination d'un moment optimal pour le déclenchement d'une récolte, une modification d'un ou de plusieurs de ces paramètres de culture à l'intérieur de l'installation de culture, le moment respectif de la récolte et/ou une amplitude respective de l'équipe de récolte peuvent être réajustés automatiquement, en ce que, lors de la constatation de la modification d'un ou de plusieurs de ces paramètres de culture, soit les objectifs de commande de la grandeur de commande pour les paramètres de culture température et concentration de dioxyde de carbone et nutrition et une lumière amenée aux lemnacées sont réajustés de manière adaptative, soit une nouvelle modélisation du processus de croissance est déclenchée, qui tient compte de la modification du ou des paramètres de culture et calcule à partir de là un nouveau moment optimal pour le déclenchement de la récolte et l'actualise dans la commande (15) dispositif de récolte (10, 11).

28. Installation de culture à commande automatique selon la revendication 27,
**caractérisé**
**en ce que** la courbe de croissance sigmoïde pour les genres utilisés, en particulier les espèces de Lemnaceae, est enregistrée dans un champ de données adaptatif dans la commande (15), la courbe de croissance sigmoïde pouvant être modélisée à partir de ce champ de données au moyen de la commande, les temps de cycle de récolte ou l'état de couverture correspondant à une courbe en dents de scie prédéterminée, des valeurs pour les moments de récolte le long des valeurs de pointe supérieures de la courbe en dents de scie pouvant être adaptées automatiquement in situ à partir de la modélisation, les valeurs adaptées de la commande (15) du dispositif de récolte (10, 11).

29. Installation de culture à commande automatique selon la revendication 27 ou 28,
**caractérisé**
**en ce qu'**il est possible d'effectuer dans les bacs de culture (2), par l'intermédiaire de capteurs (17), une détection in situ de substances contenues dans une biomasse récoltée, une détermination de métaux lourds accumulés et d'oxalate de calcium accumulé, afin de minimiser ces valeurs de concentration de métaux lourds et d'oxalate de calcium dans une biomasse à récolter, et en ce qu'il est ensuite possible de régler les durées des cycles de récolte par l'intermédiaire de la modélisation, de manière à obtenir des cycles de récolte courts et stables de 0,5 à 5 jours.

30. Installation de culture à commande automatique selon l'une quelconque des revendications 27 à 29, **caractérisé**
**en ce que** les temps de cycle de récolte et donc les temps de séjour peuvent être raccourcis de manière optimale, de telle sorte qu'un temps d'accumulation des métaux lourds et de l'oxalate de calcium peut être nettement réduit pour une teneur en protéines simultanément élevée.

31. Installation de culture à commande automatique selon l'une quelconque des revendications 27 à 30, **caractérisé**
**en ce que** l'installation de culture est pourvue d'un navigateur intégré.

32. Produit programme d'ordinateur pour la commande d'une installation de culture automatique selon l'une quelconque des revendications 27 à 31, exploitée selon un procédé selon l'une quelconque des revendications 1 à 26, **caractérisé**
**en ce que** le produit programme d'ordinateur est conçu comme un programme de commande volatile dans lequel les données caractéristiques, relatives aux genres et/ou variétés de plantes respectivement utilisés, des paramètres de croissance sigmoïde respectifs sont stockées dans un outil de programme de mise à jour.

33. Produit de programme d'ordinateur selon la revendication 32, **caractérisé**
**en ce que** le produit programme d'ordinateur comprend, en coopération avec le système de commande et le navigateur de l'établissement culturel, un outil de commande et/ou de maintenance à distance.

EP 4 102 956 B1

Figur 1

Figur 2

Steuerungscomputer

Steuerungscomputer

$$W(t) = \frac{Wmax}{2} * (tanhyp(\frac{ri0}{2} * (\prod_{T,E,N,P,CO2} ri(j)) * t + \frac{Wmax}{2} * C) + 1)$$

12 — T
30 — NO$_3^-$
31 — CO$_2$
32 — PAR
33 — relF
14 — pH
34 — EC
35 — Ca

15

38 — CO$_2$-Einleitung
39 — Lichtsteuerung
Dosiereinricht. I, II — 19, 20
Schattierung — 21
Kühlfal-len — 36
Luftheiz. — 37
Heizung-Kulturw.-nachführ. — 40
T, EC, pH — 17, 18

Ernteeinrichtung — 10, 11
Abwasser-aufb.
Reagenzien — 22
Kondenswasser — 24

Figur 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2331238 A
- EP 2928286 B1
- DE 102018003368 B3

**In der Beschreibung aufgeführte Nicht-Patentliteratur**

- **CHAKRABARTI RINA et al.** Mass Production of Lemna minor and Its Amino Acid and Fatty Acid Profiles. *FRONTIERS IN CHEMISTRY,* 15. Oktober 2018, vol. 6, 1-16
- Growth feature of biomass of Lemna aequinoctialis and Spirodela polyrrhiza in medium with nutrient character of wastewater. **CHONG Y-X et al.** DATABASE COMPENDEX [Online. ENGINEERING INFORMATION, INC, Januar 2003
- SURFACE MINING - BRAUNKOHLE AND OTHER MINERALS JANUARY/MARCH 2003 GDMB GESELLSCHAFT FUR BERGBAU. *METALLURGIE, ROHSTOFF- UND UMWELTTECHNIK E.V.,* Januar 2003, vol. 55 (1), 59-64
- **TEBBANI SIHEM et al.** Nonlinear predictive control for maximization of CO2 bio-fixation by microalgae in a photobioreactor. *BIOPROCESS AND BIO-SYS-TEMS ENGINEERING,* 21. Marz 2013, vol. 37 (1), 83-97
- **ABDOLLAHI JA-VAD et al.** Lipid production optimization and optimal control of heterotrophic microalgae fed-batch bioreactor. *CHEMICAL ENGINEER-ING SCIENCE,* 24. September 2012, vol. 84, 619-627